(19) Europäisches Patentamt
European Patent Office
Office européen des brevets

(11) **EP 4 429 074 A2**

(12) **EUROPÄISCHE PATENTANMELDUNG**

(43) Veröffentlichungstag:
**11.09.2024   Patentblatt 2024/37**

(21) Anmeldenummer: **24177412.4**

(22) Anmeldetag: **04.06.2021**

(51) Internationale Patentklassifikation (IPC):
**H02J 50/70** (2016.01)

(52) Gemeinsame Patentklassifikation (CPC):
**H02K 19/16; H02J 50/005; H02J 50/10;**
**H02J 50/70; H02K 11/012; H02K 11/0141;**
**H02K 11/042; H02K 19/12; H02K 19/36**

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **04.06.2020   DE 102020207000**

(62) Dokumentnummer(n) der früheren Anmeldung(en)
nach Art. 76 EPÜ:
**21177864.2 / 3 920 385**

(71) Anmelder: **MAHLE International GmbH**
**70376 Stuttgart (DE)**

(72) Erfinder:
- **Maier, David**
  **Bühl (DE)**
- **Müller, Samuel**
  **Herrenberg (DE)**
- **Parspour, Nejila**
  **Gerlingen (DE)**

(74) Vertreter: **Witte, Weller & Partner Patentanwälte**
**mbB**
**Postfach 10 54 62**
**70047 Stuttgart (DE)**

(54) **ELEKTRISCH ERREGTE MASCHINE UND ANORDNUNG FÜR EINE ELEKTRISCH ERREGTE MASCHINE**

(57)     Die Erfindung betrifft eine Anordnung für eine elektrisch erregte Maschine (100), umfassend:
- einen Maschinen-Rotor (10); und
- eine Erregereinrichtung (30) zur elektrischen Erregung der Maschine (100), wobei
die Erregereinrichtung (30) zumindest ein Energieübertragungssystem (20) umfasst, welches in dem Maschinen-Rotor (10) integriert ist.

Ferner betrifft die Erfindung eine elektrisch erregte Maschine (100) umfassend einen Maschinen-Stator (40) und eine erfindungsgemäße Anordnung.

Fig. 2

EP 4 429 074 A2

**Beschreibung**

Die Erfindung betrifft eine Anordnung für eine elektrisch erregte Maschine sowie eine elektrisch erregte Maschine, insbesondere eine elektrisch erregte Synchronmaschine.

Insbesondere im Bereich der Traktionsantriebe ist die Synchronmaschine auf Grund ihrer hohen Drehmoment- und Leistungsdichte etabliert. So zeichnen sich z.B. permanentmagnetisch erregte Synchronmaschinen durch eine kompakte Bauform und hohe Leistungen aus. Diese kompakte Bauform muss jedoch mittels teurer seltener Erden erkauft werden, welche zur Herstellung hochenergetischer Permanentmagnete benötigt werden. Zudem wirkt sich das permanente Rotorfeld im Hinblick auf Wirkungsgrad bei hohen Drehzahlen bzw. hohen Geschwindigkeiten nachteilig aus, da das Magnetfeld aktiv geschwächt werden muss. Eine Alternative zum permanentmagnetisch erregten Rotorfeld ist die elektrisch erregte Synchronmaschine (EESM), welche keine Permanentmagnete benötigt und somit kostengünstiger hergestellt werden kann. Neben dem Kostenvorteil bietet die EESM im Vergleich zu einer permanentmagnetisch erregten Synchronmaschine in der Regel auch eine erhöhte Sicherheit, da die Rotorerregung abschaltbar ist und im Fehlerfall keine Spannung induziert wird.

Zur Erzeugung eines magnetischen Feldes auf dem Rotor einer elektrisch erregten Synchronmaschine ist eine Übertragung von elektrischer Energie auf den Rotor bzw. auf eine Erregerwicklung des Rotors der elektrisch erregten Synchronmaschine notwendig. Dazu kann der Rotor der elektrisch erregten Synchronmaschine von einer Gleichspannungsquelle über Schleifringe oder über zusätzliche rotierende Transformatoren und Gleichrichter gespeist werden.

Das zusätzlich benötigte Energieübertragungssystem wird herkömmlicherweise meist seitlich in axialer Richtung an den aktiven Teil der Synchronmaschine angebracht, was den Bauraum in axialer Richtung vergrößert. Das für die Energieübertragung notwendige zusätzliche Energieübertragungssystem, d.h. ein Schleifringsystem oder ein kontaktloses Energieübertragungssystem (CET-System), führt im Vergleich zu einer permanentmagnetisch erregten Synchronmaschine somit zu einer weniger kompakten Bauweise. Für viele Anwendungen, z.B. auf dem Gebiet der Elektromobilität, ist eine kompakte Bauweise, insbesondere in axialer Richtung, jedoch von großer Bedeutung. Gerade der zusätzlich zur Synchronmaschine benötigte Bauraum sollte möglichst gering sein, um z.B. im Vergleich zu permanentmagnetisch erregten Synchronmaschinen die Leistungsdichte durch das Energieübertragungssystem nicht zu verringern.

Es ist daher eine Aufgabe der vorliegenden Erfindung, eine Anordnung zur Realisierung einer möglichst kompakten elektrisch erregten Maschine (insbesondere einer elektrisch erregten Synchronmaschine) bereitzustellen. Darüber hinaus ist es eine Aufgabe der vorliegenden Erfindung, eine kompakte elektrisch erregte Synchronmaschine bereitzustellen. Diese Aufgaben werden durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft eine Anordnung für eine elektrisch erregte Maschine, wobei die Anordnung folgendes umfasst:

- einen Maschinen-Rotor; und
- eine Erregereinrichtung zur elektrischen Erregung der Maschine, insbesondere des Maschinen-Rotors, wobei die Erregereinrichtung zumindest ein Energieübertragungssystem umfasst, welches zur kontaktlosen Übertragung von elektrischer Energie ausgelegt und in dem Maschinen-Rotor integriert ist.

Insbesondere betrifft die Erfindung eine Anordnung für eine elektrisch erregte Maschine, wobei die Anordnung folgendes umfasst:

- einen Maschinen-Rotor; und
- eine Erregereinrichtung zur elektrischen Erregung der Maschine, insbesondere des Maschinen-Rotors, wobei die Erregereinrichtung zumindest ein Energieübertragungssystem umfasst, welches in dem Maschinen-Rotor integriert ist.

Mit "Energieübertragungssystem" wird im Rahmen der Erfindung insbesondere kein Generator oder Motor verstanden, sondern eine Vorrichtung, mit der elektrische Energie in elektrische Energie umgewandelt wird. Mit "Energieübertragungssystem" wird somit im Rahmen der Erfindung insbesondere eine Vorrichtung zur Übertragung von elektrischer Energie (in elektrische Energie) verstanden, welche selbst keine mechanische Arbeit verrichten und/oder kein Drehmoment erzeugen kann. Zudem ist die Funktion des im Rahmen der Erfindung beschriebenen Energieübertragungssystems unabhängig vom Betrieb der elektrisch erregten Maschine, insbesondere von deren Drehzahl. Es ist somit ein Betrieb sowohl bei Stillstand der Maschine wie auch in einem rechts- oder linkslauf der Maschine möglich.

Insbesondere kann das (kontaktlose) Energieübertragungssystem ein herkömmliches Schleifringsystem für eine elektrisch erregte Maschine (z.B. eine Synchronmaschine), welches zur Erregung eines Rotors der Maschine dient, ersetzen. Ähnlich wie der Schleifring kann das Energieübertragungssystem zur Bestromung bzw. Erregung einer Rotorwicklung der Maschine dienen.

Die Anordnung eignet sich insbesondere zur Realisierung oder Herstellung einer elektrisch erregten Synchronmaschine bzw. kann zur Realisierung oder Herstellung einer elektrisch erregten Synchronmaschine verwendet werden. Die Anordnung kann sich jedoch auch für andere elektrisch erregte Maschinen, wie z.B. für eine Transversalflussmaschine, eignen. Insbesondere kann die Anordnung ein Bestandteil einer elektrisch erregten Synchronmaschine oder einer Transversalflussmaschine werden oder sein.

Unter einem "Maschinen-Rotor" wird insbesondere ein Rotor einer elektrisch erregten Maschine bzw. ein Rotor für eine elektrisch erregte Maschine verstanden. Mit anderen Worten ist ein Maschinen-Rotor ein Rotor, der für eine elektrische Maschine geeignet ist, für eine elektrische Maschine verwendet werden kann und/oder für eine elektrische Maschine vorgesehen ist. Das magnetische Rotorfeld wird bei der EESM zumindest teilweise (z.B. in Kombination mit einem Permanentmagnet) oder vollständig durch einen elektrischen Strom erzeugt.

Die "Erregereinrichtung" eignet sich insbesondere zur elektrischen Erregung des Maschinen-Rotors. Insbesondere kann mit der Erregereinrichtung Energie von einer Energiequelle auf den Maschinen-Rotor übertragen werden. Unter "Erregung" wird im Sinne dieser Beschreibung insbesondere das Versorgen einer Erregerwicklung bzw. Erregerspule mit elektrischem Strom und/oder das Erzeugen eines Magnetfelds auf dem Rotor (in Folge des eingespeisten Stroms) verstanden.

Insbesondere ist das zumindest eine Energieübertragungssystem ein kontaktloses bzw. drahtloses, beispielsweise ein induktives oder kapazitives, Energieübertragungssystem.

Das zumindest eine Energieübertragungssystem ist in dem Rotor der Maschine integriert. Mit anderen Worten ist das zumindest eine Energieübertragungssystem in dem Maschinen-Rotor angeordnet. Insbesondere ist das zumindest eine Energieübertragungssystem innerhalb bzw. im Inneren des Maschinen-Rotors angeordnet.

Durch die Integration des zumindest einen Energieübertragungssystems im Rotor der Maschine kann ein zusätzlicher Bauraum, wie er bei herkömmlichen elektrisch erregten Maschinen benötigt wird, reduziert bzw. vermieden werden. Auf diese Weise kann eine äußerst kompakte elektrisch erregte Maschine realisiert bzw. bereitgestellt werden.

Das Energieübertragungssystem weist insbesondere eine Rotorwicklung bzw. Rotorspule und eine Statorwicklung bzw. Statorspule auf. Die Rotorspule und Statorspule sind insbesondere drehbar zueinander angeordnet. Insbesondere sind die Rotorspule und Statorspule derart relativ zueinander angeordnet, dass bei einer Drehbewegung der Spulen relativ zueinander kein Strom induziert wird. Grundsätzlich kann sowohl die Rotorspule als auch die Statorspule des Energieübertragungssystems jeweils eine Primärspule oder eine Sekundärspule sein. Vorzugsweise ist jedoch die Statorspule des Energieübertragungssystems eine Primärspule, während die Rotorspule des Energieübertragungssystems eine Sekundärspule ist. Um Strom in der Sekundärspule zu erzeugen, wird an der Primärspule eine Wechselspannung angelegt. Eine relative Rotation zwischen der Primärspule und der Sekundärspule ist dagegen nicht notwendig. Insbesondere können die Primär- und Sekundärspule zylindrisch ausgebildet und/oder zylindrisch zueinander angeordnet sein.

In einer bevorzugten Ausführungsform weist der Maschinen-Rotor eine Maschinen-Rotorwelle auf und das zumindest eine Energieübertragungssystem der Erregereinrichtung ist in einem Hohlraum der Maschinen-Rotorwelle angeordnet. Die Maschinen-Rotorwelle ist also als Hohlwelle ausgeführt. Mit anderen Worten ist die Maschinen-Rotorwelle hohlförmig ausgebildet.

In einer weiteren bevorzugten Ausführungsform weist die Maschinen-Rotorwelle zumindest eine Kabeldurchführung vom Hohlraum nach außen bzw. in einen äußeren Bereich der Maschinen-Rotorwelle auf. Alternativ oder zusätzlich weist die Maschinen-Rotorwelle zumindest eine Öffnung zur Kühlung des Energieübertragungssystems bzw. des Maschinen-Rotors auf. Vorzugsweise weist die Maschinen-Rotorwelle mehrere Kühl-Öffnungen auf. Diese Kühl-Öffnungen sind vorzugsweise ausgelegt und angeordnet, dass sich ein Luftstrom innerhalb der Maschinen-Rotorwelle und/oder des zumindest einen Energieübertragungssystems bilden und/oder ausbreiten kann. Somit kann ein Wärmestau innerhalb des Rotors reduziert bzw. vermieden werden.

Das zumindest eine Energieübertragungssystem der Erregereinrichtung ist zu einer kontaktlosen Übertragung von Energie ausgelegt. Unter einer kontaktlosen Energieübertragung werden z.B. eine drahtlose, eine bürstenlose, und insbesondere eine induktive oder kapazitive, Energieübertragung verstanden. Insbesondere ist das Energieübertragungssystem der Erregereinrichtung ein induktives oder kapazitives Energieübertragungssystem. Im Fall einer induktiven Energieübertragung erfolgt die Energieübertragung insbesondere mit Hilfe eines Magnetfelds.

Die Verwendung eines kontaktlosen Energieübertragungssystems (insbesondere eines induktiven Energieübertragungssystems) bietet dabei aber eine Reihe von Vorteilen. Im Gegensatz zu einem Schleifringsystem ist ein kontaktloses Energieübertragungssystem verschleißfrei. Durch die Integration in den Rotor der elektrischen Maschine ist der Zugang zum Energieübertragungssystem in einem bestehenden System, z.B. zum Wechseln der Schleifringe, nur schwer möglich und daher für Serienprodukte ungeeignet. Des Weiteren kann ein beim Schleifring entstehender (Graphit-)Staub kaum abgeführt werden.

Die Verwendung eines kontaktlosen Übertragungssystems bietet geometrisch mehr Freiheiten als die eines Schleifringsystems. So sind Schleifringsysteme typischerweise axial sehr kurz, benötigen dafür jedoch radial mehr Bauraum, um die Graphitstäbe unterzubringen. Diese sind prinzipbedingt orthogonal zur drehenden Oberfläche. Um möglichst große Wartungsintervalle zu haben, sind die Graphitstäbe dabei üblicherweise verhältnismäßig lang. Alternativ denkbar wäre jedoch ein axiales Schleifringsystem, welches eine Art scheibenförmige Schleifkontakte auf dem Rotor besitzt. So können die Graphitstäbe axial angebracht und ebenfalls ein radial kurzes und axial längliches Schleifringsystem ermöglich werden. Bei einem typischen Aufbau ohne Integration in den Rotor wäre bei einem solchen System der axiale benötigte Bauraum stark erhöht.

Durch die Integration des Energieübertragungssystems in den Rotor ist dieses thermisch gekapselt, so dass kaum Wärme aus dem inneren des Rotors abgeführt werden kann. Zudem ergibt sich kaum Bauraum für ein Kühlungssystem. Daher ist die Integration von klassischen Schleifringkontakten in den Rotor zwar möglich, thermisch betrachtet jedoch eine Herausforderung. Zudem kann der Wirkungsgrad eines kontaktlosen Energieübertragungssystems höher sein. Insbesondere durch den Einsatz von elektrisch hochleitenden Materialien zur Flussschirmung können Wirkungsgrade im Bereich von ca. 90% über den kompletten Betriebsbereich erreicht werden, wodurch ein kontaktloses Energieübertragungssystem keine Nachteile im Wirkungsgrad gegenüber Schleifringsystemen aufweist. Die Verluste in einem kontaktlosen Energieübertragungssystem sind unabhängig von der Drehzahl der Maschine. Insbesondere bei großen Wellendurchmesser ist ein kontaktloses Energieübertragungssystem von Vorteil, weil damit eine erhöhte Wärmeentwicklung und ein erhöhter Abrieb, wie sie z.B. im Falle eines Schleifringsystems bei großen Winkelgeschwindigkeiten auftreten würden, vermieden werden können.

In einer weiteren bevorzugten Ausführungsform umfasst das zumindest eine Energieübertragungssystem eine rotierende Energieübertragungsvorrichtung bzw. einen rotierenden Energieübertrager. Insbesondere umfasst das zumindest eine Energieübertragungssystem der Erregereinrichtung eine stationäre Primärseite (im Folgenden auch als "Erreger-Stator" bezeichnet) und eine rotierbare bzw. rotierende Sekundärseite (im Folgenden auch als "Erreger-Rotor" bezeichnet). Vorzugsweise ist das Energieübertragungssystem als Außenläufer ausgebildet, d.h. der Erreger-Stator ist im Inneren des Erreger-Rotors angeordnet. Mit anderen Worten sind Erreger-Stator und Erreger-Rotor derart angeordnet, dass der Erreger-Rotor den Erreger-Stator umlaufen kann. Der Erreger-Stator ist vorzugsweise aus einem, sowohl magnetisch als auch elektrisch, nicht leitenden Material ausgebildet. Besonders bevorzugt ist der Erreger-Stator aus einem Kunststoff (insbesondere einem thermoplastischen Kunststoff) wie z.B. POM oder PEEK ausgebildet. Der Erreger-Stator (bzw. ein Rundstab des Erreger-Stators), welcher in den Erreger-Rotor hineinragt, kann eine Bohrung (insbesondere entlang der Längsachse des Erreger-Stators, also eine Längsbohrung bzw. einen Kanal) aufweisen, um den Erreger-Stator von innen, insbesondere mit Luft, Wasser und/oder Öl als Kühlungsmittel, zu kühlen. Durch eine solche Kühlung kann eine Überhitzung der Energieübertragungsvorrichtung im Inneren des Synchronmaschinen-Rotors bzw. im Hohlraum der Maschinen-Rotorwelle vermieden und der Wirkungsgrad gesteigert werden.

In einer weiteren bevorzugten Ausführungsform ist das zumindest eine Energieübertragungssystem im Maschinen-Rotor derart angeordnet, dass der Erreger-Rotor drehfest mit dem Maschinen-Rotor bzw. der Rotorwelle des Maschinen-Rotors verbunden ist. Insbesondere ist der Erreger-Stator ein Innenstator und der Erreger-Rotor ein Außenrotor bzw. Außenläufer. Mit anderen Worten ist der Erreger-Stator innerhalb des Erreger-Rotors angeordnet.

In einer weiteren bevorzugten Ausführungsform weist der Maschinen-Rotor eine Erregerwicklung auf, wobei die Erregereinrichtung ausgelegt ist, um elektrische Energie kontaktlos von einer (stationären) Primärseite des Energieübertragungssystems (bzw. einem "Erreger-Stator") auf eine (rotierbare bzw. rotierende) Sekundärseite des Energieübertragungssystems (bzw. einen "Erreger-Rotor"), und schließlich von der Sekundärseite des Energieübertragungssystems (bzw. vom Erreger-Rotor) auf die Erregerwicklung des Maschinen-Rotors zu übertragen. Die Energieübertragung vom Erreger-Rotor auf die Erregerwicklung des Maschinen-Rotors erfolgt, insbesondere kabelgeführt, über eine dazwischengeschaltete Elektronik (insbesondere über eine Blindleistungskompensation bzw. Blindleistungskompensationseinheit und/oder einen Gleichrichter).

In einer weiteren bevorzugten Ausführungsform umfasst die Erregereinrichtung ferner zumindest eine Elektronikeinrichtung (insbesondere umfassend eine primärseitige und/oder sekundärseitige Elektronikeinrichtung). Die Elektronikeinrichtung umfasst insbesondere zumindest eine Kompensationseinheit, einen Wechselrichter und/oder einen Gleichrichter.

Vorzugsweise umfasst die Erregereinrichtung eine primärseitige Elektronikeinrichtung mit einem Wechselrichter (insbesondere einphasig) und/oder eine sekundärseitige Elektronikeinrichtung mit einem Gleichrichter. Die primärseitige Elektronikeinrichtung weist ferner vorzugsweise eine primärseitige Kompensationseinheit, insbesondere eine primärseitige Blindleistungskompensationseinheit, auf. Die sekundärseitige Elektronikeinrichtung weist ferner vorzugsweise eine sekundärseitige Kompensationseinheit, insbesondere eine sekundäre Blindleistungskompensationseinheit, auf. Die sekundärseitige Elektronikeinrichtung ist vorzugsweise an und/oder außerhalb der Maschinen-Rotorwelle (bzw. außerhalb des Hohlraums der Maschinen-Rotorwelle) angeordnet ist. Beispielsweise kann die sekundärseitige Elektronikeinrichtung im Bereich eines Lagers der Maschinen-Rotorwelle und/oder im Bereich der Erregerwicklung des Maschinen-Rotors angeordnet sein.

In einer weiteren bevorzugten Ausführungsform umfasst die Anordnung ferner eine Energie- bzw. Spannungsquelle (insbesondere eine Batterie) und/oder einen Umrichter. Der Umrichter kann insbesondere mit der Energiequelle und/oder einer Statorwicklung der elektrisch erregten Maschine verbunden werden (bzw. damit verbunden sein) und dient der Steuerung der elektrisch erregten Maschine. Bei dem Umrichter für die elektrisch erregte Maschine handelt es sich insbesondere um einen Mehrphasen-Umrichter (z.B. einen 3-Phasen-Umrichter).

In einer weiteren bevorzugten Ausführungsform ist eine Betriebsfrequenz des Energieübertragungssystems unabhängig von einer Drehzahl (der mit dem Energieübertragungssystem bzw. der Erregereinrichtung) elektrisch erregten Maschine. Mit anderen Worten ist eine Betriebsfrequenz des Energieübertragungssystems unabhängig von einer Betriebsfrequenz der elektrisch erregten Maschine. Insbesondere ist somit auch ein Betrieb des Energieübertragungssystems bzw. der Erregereinrichtung (und damit eine Erregung bzw. eine Drehmomentbildung der elektrisch erregten Maschine) im bzw. aus dem Stillstand der elektrisch erregten Maschine möglich.

Die Verluste bei einem kontaktlosen Energieübertragungssystem teilen sich in der Regel in Kupferverluste im Leiter direkt an der Übertragungsstrecke, Verluste in der Schirmung (insbesondere Wirbelstromverluste), Verluste in anderen Materialien (wie z.B. Ummagnetisierungsverluste in der Flussführung (hervorgerufen durch das Magnetfeld), und in Verluste in einem nachgeschalteten Gleichrichter auf dem Rotor auf. Somit ist es vorteilhaft, einzig die Übertragungsstrecke an sich in den Maschinen-Rotor zu integrieren und den Gleichrichter außerhalb des Maschinen-Rotors aufzubauen bzw. anzuordnen. Beispielsweise kann der Gleichrichter im Bereich des Lagers bzw. der Wicklung, welche mit Luft und/oder mit Ölnebel (bzw. fein zerstäubtem Öl) durchströmt werden, angeordnet sein. Dadurch können die Wärmequellen im gekapselten System innerhalb des Rotors der Maschine auf ein Minimum reduziert werden, so dass die Temperatur innerhalb des Rotors selbst bei nur geringer Durchlüftung nicht über einen kritischen Wert ansteigt.

In einer weiteren bevorzugten Ausführungsform umfasst die Erregereinrichtung zwei oder mehrere Energieübertragungssysteme. Insbesondere kann der Maschinen-Rotor zwei oder mehrere (geteilte bzw. voneinander getrennte) Rotorwicklungen bzw. Rotorwicklungsabschnitte aufweisen, wobei die Erregereinrichtung vorzugsweise zu jeder Rotorwicklung bzw. zu jedem Rotorwicklungsabschnitt ein zugehöriges Energieübertragungssystem aufweist. Dies kann z.B. Vorteile im Betrieb bzw. in der Regelung haben. Weiterhin kann damit eine Ausfallsicherheit gewährleistet werden. Und der in der Hohlwelle zur Verfügung stehende Bauraum kann somit möglichst effektiv genutzt werden.

Alternativ oder zusätzlich umfasst die Erregereinrichtung ferner zumindest ein Datenübertragungssystem, welches vorzugsweise im Rotor der Maschine integriert ist. Vorzugsweise ist das Datenübertragungssystem zu einer kontaktlosen bzw. drahtlosen, insbesondere bürstenlosen, kapazitiven oder induktiven Übertragung von Daten (insbesondere mit Hilfe eines Magnetfelds) ausgelegt. Vorzugsweise ist das zumindest eine Datenübertragungssystem in einem Hohlraum der Maschinen-Rotorwelle angeordnet. Vorzugsweise ist das Datenübertragungssystem ausgelegt, um Daten des Rotors (z.B. Temperatur und/oder Strom des Rotors bzw. der Rotorwicklung), welche z.B. mittels Sensoren und/oder Messeinrichtungen erfasst werden, zu übertragen. Vorzugsweise umfasst das Datenübertragungssystem einen Datenübertragungs-Stator und einen Datenübertragungs-Rotor, wobei der Datenübertragungs-Rotor vorzugsweise drehfest mit dem Maschinen-Rotor bzw. der Rotorwelle des Maschinen-Rotors verbunden ist. Vorzugsweise erfolgt die Datenübertragung kontaktlos vom Datenübertragungs-Rotor zum Datenübertragungs-Stator des Datenübertragungssystems.

In einer weiteren bevorzugten Ausführungsform ist an zumindest einen aktiven Teil des Energieübertragungssystems eine zusätzliche elektrisch leitfähige Materialschicht angeordnet, wobei ein aktiver Teil des Energieübertragungssystems ein Teil des Energieübertragungssystems ist, welcher zumindest teilweise einem zur Energieübertragung genutzten Magnetfeld ausgesetzt ist, und wobei die elektrische Leitfähigkeit der zusätzlichen Materialschicht größer ist als die elektrische Leitfähigkeit des zumindest einen aktiven Teils.

Durch das Anordnen einer zusätzlichen elektrisch leitfähigen Materialschicht an zumindest einen aktiven Teil des Energieübertragungssystems, insbesondere am Erreger-Stator, kann die Effizienz des Energieübertragungssystems gesteigert werden. Insbesondere kann der Wirkungsgrad des Energieübertragungssystems gesteigert werden und/oder eine Reduzierung der Wärmeentwicklung in dem Energieübertragungssystem erreicht werden.

Das Anordnen einer zusätzlichen elektrisch leitfähigen Materialschicht an zumindest einen aktiven Teil des Energieübertragungssystems umfasst insbesondere ein Aufbringen einer zusätzlichen elektrisch leitfähigen Materialschicht auf zumindest einen aktiven Teil des Energieübertragungssystems. Insbesondere kann eine zusätzliche elektrisch leitfähige Materialschicht zu zumindest einem aktiven Teil des Energieübertragungssystems hinzugefügt werden.

Mit dem Begriff "zusätzliche elektrisch leitfähige Materialschicht" ist gemeint, dass eine elektrisch leitfähige Materialschicht zusätzlich zu den bereits vorhandenen elektrisch leitfähigen Materialien des Energieübertragungssystems verwendet wird. Ein Energieübertragungssystem umfasst eine Vielzahl von elektrisch leitfähigen Komponenten bzw. Materialien, welche für die bestimmungsgemäße Funktion des Energieübertragungssystems eingesetzt werden bzw. notwendig sind. Beispielsweise umfasst der Stator, Rotor oder eine Welle des Energieübertragungssystems elektrisch leitfähige Materialien, welche die prinzipielle Funktion des Energieübertragungssystems, nämlich Energie zu übertragen, ermöglichen. Eine "zusätzliche elektrisch leitfähige Materialschicht" im Sinne der vorliegenden Erfindung gehört jedoch nicht zu den für den grundsätzlichen Betrieb des Energieübertragungssystems vorgesehenen bzw. erforderlichen Materialien. Die "zusätzliche elektrisch leitfähige Materialschicht" stellt neben den bereits vorhandenen elektrisch leitfähigen Materialien des Energieübertragungssystems vielmehr eine zusätzliche Komponente dar, welche für den Betrieb nicht unbedingt erforderlich ist, aber eine Wärmeentwicklung beim Betrieb des Energieübertragungssystems reduzieren

5

und den Wirkungsgrad des Energieübertragungssystems steigern kann.

Mit dem Begriff "aktiver Teil" (auch "aktive Komponente" oder "aktiver Bereich") des Energieübertragungssystems wird ein Teil, eine Komponente oder ein Bereich des Energieübertragungssystems verstanden, welcher/welche zumindest teilweise dem zur Energieübertragung genutzten Magnetfeld ausgesetzt ist. Insbesondere wird damit ein Teil, eine Komponente oder ein Bereich des Energieübertragungssystems verstanden, welcher/welche einer durch das zur Energieübertragung genutzte Magnetfeld bewirkten Magnetfeldstärke bzw. magnetischen Flussdichte ausgesetzt ist, die mindestens noch 1%, vorzugsweise mindestens noch 0,1% und besonders bevorzugt mindestens noch 0,01% der vom zur Energieübertragung genutzten Magnetfeld erzeugten Magnetfeldstärke bzw. magnetischen Flussdichte beträgt. Mit anderen Worten ist ein aktiver Teil des Energieübertragungssystems im Sinne der vorliegenden Beschreibung insbesondere ein Teil, eine Komponente oder ein Bereich des Energieübertragungssystems, welcher/welche dem zur Energieübertragung genutzten Magnetfeld noch mindestens zu 1%, vorzugsweise mindestens noch zu 0,1% und besonders bevorzugt mindestens noch zu 0,01%, ausgesetzt ist. Ein aktiver Teil ist insbesondere ein Teil, eine Komponente oder ein Bereich des Energieübertragungssystems, welcher/welche sich an einer Stelle des Energieübertragungssystems befindet, an der noch mehr als 1%, vorzugsweise mehr als 0,1% und besonders bevorzugt mehr als 0,01% des Maximalwertes der im Energieübertragungssystem vorhandenen magnetischen Flussdichte vorhanden ist. Die obigen Werte beziehen sich auf die magnetische Flussdichte, welche von den Spulen des Energieübertragungssystems in einem Luftraum ohne metallische Komponenten erzeugt wird bzw. gemessen werden kann.

Die zusätzliche elektrisch leitfähige Materialschicht kann z.B. vollständig oder teilweise aus Kupfer mit einer elektrischen Leitfähigkeit von $58 \cdot 10^6$ S/m, und/oder Silber mit einer elektrischen Leitfähigkeit von $61 \cdot 10^6$ S/m und/oder Gold mit einer elektrischen Leitfähigkeit von $45 \cdot 10^6$ S/m ausgebildet sein.

In einer weiteren bevorzugten Ausführungsform ist die zusätzliche elektrisch leitfähige Materialschicht an einem Spulensystem des Energieübertragungssystems, angeordnet. Insbesondere erfolgt die Anordnung im Bereich von elektrisch schlecht leitenden (oder elektrisch nichtleitenden) und gleichzeitig magnetisch leitenden Materialen, oder im Bereich von elektrisch schlecht leitenden (oder elektrisch nichtleitenden) und gleichzeitig magnetisch nichtleitenden Materialien. Unter "elektrisch schlecht leitend" wird hier insbesondere verstanden, dass die elektrische Leitfähigkeit geringer, insbesondere signifikant geringer, als die elektrische Leitfähigkeit der zusätzlich angeordneten elektrisch leitfähigen Schicht ist.

In einer weiteren bevorzugten Ausführungsform weist das Energieübertragungssystem einen Stator aus einem elektrisch nichtleitenden Material und/oder einem magnetisch nichtleitenden Material auf.

Im Rahmen der vorliegenden Erfindung wurde erkannt, dass sich die bei einem rotierenden Energieübertragungssystem verwendeten Materialien (z.B. für den Stator, Rotor und/oder der Welle), die dem für die Energieübertragung erzeugten Magnetfeld ausgesetzt sind, durch in diesen Materialien auf Grund des Magnetfeldes induzierten Wirbelströme stark erwärmen können. Zudem entstehen dadurch Verluste, die den Wirkungsgrad des Energieübertragungssystems mindern. Das Ausmaß der Erwärmung in einem Material hängt dabei insbesondere von der elektrischen Leitfähigkeit des Materials ab. Für Materialen mit einer relativ geringen elektrischen Leitfähigkeit wie z.B. Stahl ist die Erwärmung in der Regel höher als für Materialen mit einer größeren elektrischen Leitfähigkeit wie z.B. Kupfer oder Silber.

Um eine Erwärmung bzw. Wärmeentwicklung zu reduzieren, kann erfindungsgemäß eine zusätzliche hochleitfähige Materialschicht an ein weniger leitfähiges Material des Energieübertragungssystems, welches dem zur Energieübertragung erzeugten Magnetfeld ausgesetzt ist, angeordnet oder darauf aufgebracht werden bzw. sein. Auf Grund des sogenannten Skin-Effekts kann dadurch vorteilhafterweise erreicht werden, dass das für die Energieübertragung verwendete Magnetfeld bzw. magnetische Wechselfeld weniger weit in den Materialverbund eindringt. Denn die sogenannte Eindringtiefe $\delta$ des Magnetfeldes und damit auch der durch das Magnetfeld induzierten Wirbelströme in das Material ist umso kleiner, je kleiner der spezifische elektrische Widerstand, d.h. je größer die elektrische Leitfähigkeit, des Materials ist. Dies wird weiter unten noch näher erläutert. Insbesondere kann somit erreicht werden, dass Wirbelströme hauptsächlich oder ausschließlich in der zusätzlich angeordneten elektrisch hochleitfähigen Materialschicht entstehen, was vorteilhafterweise ferner dazu beiträgt, dass eine Erwärmung des Materialverbunds durch die Wirbelströme reduziert wird. Unter "Materialverbund" wird ein Verbund bzw. eine Kombination aus dem Material, auf das die zusätzliche elektrisch leitfähige Materialschicht aufgebracht ist, und der zusätzlichen elektrisch leitfähigen Materialschicht verstanden.

Wirbelströme entstehen bei großen Frequenzen nur an der Oberfläche des Materials. Wie weit ein magnetisches Wechselfeld in ein elektrisch leitfähiges Material eindringt und damit Wirbelströme verursacht, ist durch die Eindringtiefe $\delta$ gegeben (Skin-Effekt). Die Eindringtiefe $\delta$ berechnet sich für Rundleiter vereinfacht wie folgt:

$$\delta = \sqrt{\frac{2\rho}{\omega\mu}} \quad,$$

wobei $\rho$ der spezifische Widerstand des Leiters, $\omega$ die Kreisfrequenz des Magnetfelds und $\mu$ die absolute Permeabilität des Leiters sind. Die Eindringtiefe ist somit material- als auch frequenzabhängig. Bei technisch sinnvollen Aufbauten (große mechanische Stabilität) und hohen Frequenzen ist das bei einer Energieübertragungsvorrichtung verwendete Material grundsätzlich dicker als die Eindringtiefe $\delta$ und elektrisch leitfähig (z.B. Stahlwelle). Weiterhin ist es auf Grund des Bestrebens, die Baugröße gering zu halten, in der Regel nicht möglich, den Abstand des magnetischen Feldes zum elektrisch leitenden Material so groß zu wählen, dass die Feldstärke und somit die Stärke des Wirbelstromes vernachlässigbar sind. Folglich können in Systemen mit geringer Baugröße Wirbelströme nicht vermieden werden. Im Rahmen der vorliegenden Erfindung kann jedoch erreicht werden, dass die Wirbelströme zum einen möglichst wenig in das Material eindringen und zum anderen hauptsächlich oder ausschließlich in der zusätzlich angeordneten Materialschicht entstehen, was eine Erwärmung und damit auch etwaige Energie- bzw. Leistungsverluste reduziert. Folglich kann auch der Wirkungsgrad des Energieübertragungssystems gesteigert werden.

Folgende Tabelle zeigt ein Beispiel für den Zusammenhang vom Abfall des Strombelags und der Eindringtiefe (Abfall auf 1/e, d.h. auf ca. 37%) bei verschiedenen Frequenzen bei einem runden Kupferleiter:

| Frequenz | Eindringtiefe | Frequenz | Eindringtiefe |
|---|---|---|---|
| 5 Hz | 29,7 mm | 5 MHz | 29,7 $\mu$m |
| 16 Hz | 16,6 mm | 16 MHz | 16,6 $\mu$m |
| 50 Hz | 9,38 mm | 50 MHz | 9,38 $\mu$m |
| 160 Hz | 5,24 mm | 160 MHz | 5,24 $\mu$m |
| 500 Hz | 2,97 mm | 500 MHz | 2,97 $\mu$m |
| 1,6 kHz | 1,66 mm | 1,6 GHz | 1,66 $\mu$m |
| 5 kHz | 938 $\mu$m | 5 GHz | 938 nm |
| 16 kHz | 524 $\mu$m | 16 GHz | 524 nm |
| 50 kHz | 297 $\mu$m | 50 GHz | 297 nm |
| 160 kHz | 166 $\mu$m | 160 GHz | 166 nm |
| 500 kHz | 93,8 $\mu$m | 500 GHz | 93,8 nm |
| 1,6 MHz | 52,4 $\mu$m | 1,6 GHz | 52,4 nm |

Typische Betriebsfrequenzen für die kontaktlose induktive Energieübertragung liegen im Bereich von 50-500 kHz, was einer Eindringtiefe bei Kupfer von 297-93 $\mu$m entspricht. Die Entwicklung in der Leistungselektronik erlaubt mittlerweile höhere Frequenzen, so dass im Folgenden eine Frequenz von 500 kHz betrachtet wird. Weiterhin kann auch das Spulensystem auf eine höhere Frequenz optimiert werden, und damit können zusätzlich die Baugrößen von Spule und Kondensator verkleinert werden. Bei einer mit einer höheren Frequenz verbundenen kleineren Eindringtiefe $\delta$ wirkt sich die vorliegende Erfindung noch vorteilhafter aus.

In einer bevorzugten Ausführungsform ist der zumindest eine aktive Teil der Energieübertragungsvorrichtung ein Bestandteil einer stationären Primärseite bzw. eines Stators der Energieübertragungsvorrichtung. Alternativ oder zusätzlich ist der zumindest eine aktive Teil der Energieübertragungsvorrichtung ein Bestandteil einer rotierbaren und/oder rotierenden Sekundärseite bzw. eines Rotors der Energieübertragungsvorrichtung. Mit anderen Worten umfasst der zumindest eine aktive Teil der Energieübertragungsvorrichtung einen Stator und/oder einen Rotor der Energieübertragungsvorrichtung. Insbesondere ist der zumindest eine aktive Teil der Energieübertragungsvorrichtung ein Stator und/oder ein Rotor der Energieübertragungsvorrichtung. Mit dem Begriff Stator der Energieübertragungsvorrichtung wird im Rahmen dieser Erfindung insbesondere eine stationäre Primärseite der Energieübertragungsvorrichtung verstanden. Mit dem Begriff Rotor der Energieübertragungsvorrichtung wird im Rahmen dieser Erfindung insbesondere eine rotierbare bzw. rotierende Sekundärseite der Energieübertragungsvorrichtung verstanden. Insbesondere ist die Sekundärseite (bzw. der Rotor) der Energieübertragungsvorrichtung um die stationäre Primärseite (bzw. den Stator) rotierbar.

In einer weiteren bevorzugten Ausführungsform umfasst der zumindest eine aktive Teil der Energieübertragungsvorrichtung eine Welle bzw. Rotorwelle und/oder einen Kühlkörper und/oder ein Ferritplättchen und/oder ein Gehäuse und/oder eine Ferritscheibe und/oder einen Deckel und/oder eine Statorwicklung und/oder eine Rotorwicklung des Energieübertragungssystems. Insbesondere ist der zumindest eine aktive Teil der Energieübertragungsvorrichtung eine Welle bzw. Rotorwelle und/oder ein Kühlkörper und/oder ein Ferritplättchen und/oder ein Gehäuse und/oder eine Ferritscheibe und/oder ein Deckel und/oder eine Statorwicklung und/oder eine Rotorwicklung der Energieübertragungsvorrichtung. Die Welle bzw. Rotorwelle kann z.B. eine Stahlwelle sein.

Anstelle der Verwendung eines Ferrits (bzw. des Ferritplättchens und/oder der Ferritmatte) kann es vorteilhaft sein, ein elektrisch und magnetisch nichtleitendes Material, insbesondere Kunststoff, einzusetzen. Insbesondere kann durch das Anordnen eines solchen nichtleitenden Materials (wie z.B. Kunststoff) zwischen der zusätzlich elektrisch leitfähigen Materialschicht und einer Spule des Energieübertragungssystems ein Abstand zwischen der zusätzlich elektrisch leitfähigen Materialschicht und der Spule hergestellt bzw. eingehalten werden. In anderen Worten kann ein nichtleitendes Material beispielsweise in Form eines Abstandselements zwischen der zusätzlich elektrisch leitfähigen Materialschicht und einer Spule der Energieübertragungsvorrichtung angeordnet sein. Das nichtleitende Material, insbesondere das Abstandselement aus nichtleitendem Material kann beispielsweise Kunststoff umfassen oder vollständig aus Kunststoff bestehen. Das nichtleitende Material, insbesondere das Abstandselement aus nichtleitendem Material kann beispielsweise ferritfrei sein, d.h. kein Ferrit und bevorzugt kein Kompositmaterial umfassend Ferrit enthalten. Somit kann sich das nichtleitende Material, insbesondere das Abstandselement, von einer Ferritmatte unterscheiden, da das das nichtleitende Material frei von Ferrit-Kompositen ist, d.h. keine Ferrit-Komposite aufweist. Im Rahmen der vorliegenden Erfindung hat sich herausgestellt, dass ein solcher Abstand vorteilhafterweise dazu führt, dass Verluste, die bei einem direkten Anordnen oder Anlegen der Spule an die zusätzliche elektrisch leitfähige Materialschicht auftreten würden, reduziert bzw. vermieden werden können. Zudem können durch die Verwendung eines Kunststoffes anstelle von Ferrit die Materialkosten reduziert werden. Gerade wenn die zusätzliche elektrisch leitfähige Materialschicht eine Kupferschicht ist, kann es vorteilhaft sein, anstelle des Ferrits einen nichtleitenden Kunststoff zu verwenden, und zwar insbesondere derart, dass ein Abstand zwischen der Kupferschicht und der Spule, wie es auch bei der Verwendung von Ferrit der Fall wäre, beibehalten wird.

In einer weiteren bevorzugten Ausführungsform wird die Schichtdicke der angeordneten zusätzlichen Materialschicht in Abhängigkeit einer vorbestimmten Frequenz des zur Energieübertragung genutzten Magnetfelds bzw. der damit verbundenen magnetischen Flussdichte gewählt. Die vorbestimmte Frequenz entspricht insbesondere der Betriebsfrequenz, bei der die Energieübertragungsvorrichtung betrieben wird bzw. vorgesehen ist, betrieben zu werden. Auf diese Weise kann die Eindringtiefe des Magnetfelds und damit die Eindringtiefe von durch das Magnetfeld induzierten Wirbelströmen derart abgestimmt werden, dass die Wirbelströme hauptsächlich oder ausschließlich in der angeordneten zusätzlichen Materialschicht entstehen, d.h. nur zu einem geringen Teil oder gar nicht in die aktiven Teile des Energieübertragungssystems eindringen. Vorzugsweise wird die Schichtdicke der zusätzlichen elektrisch leitfähigen Materialschicht derart gewählt, dass im Bereich der angeordneten zusätzlichen Materialschicht mindestens 60%, insbesondere 63%, der durch das zur Energieübertragung genutzte Magnetfeld induzierten Wirbelströme in der zusätzlichen Materialschicht gebildet werden bzw. auftreten. Mehr bevorzugt wird die Schichtdicke der zusätzlichen elektrisch leitfähigen Materialschicht derart gewählt, dass im Bereich der angeordneten zusätzlichen Materialschicht durch das zur Energieübertragung genutzte Magnetfeld induzierte Wirbelströme zu mindestens 70%, noch mehr bevorzugt zu mindestens 80%, noch mehr bevorzugt zu mindestens 90%, am meisten bevorzugt zu mindestens 95% und insbesondere zu mindestens 99% in der zusätzlichen Materialschicht gebildet werden bzw. auftreten. Im Umkehrschluss bedeutet dies, dass der Anteil der durch das Magnetfeld erzeugten Wirbelströme im aktiven Teil des Energieübertragungssystems, d.h. in den Materialien, an denen das zusätzliche elektrisch leitfähige Material angeordnet bzw. aufgebracht wurde, maximal 40%, bevorzugt maximal 20%, noch mehr bevorzugt maximal 10% und am meisten bevorzugt maximal 5% beträgt.

In einer weiteren bevorzugten Ausführungsform entspricht die Schichtdicke der angeordneten zusätzlichen Materialschicht mindestens einer durch den Skin-Effekt bedingten bzw. in Folge des Skin-Effekts bewirkten Eindringtiefe in das Material der zusätzlichen Materialschicht bei einer vorgegebenen Frequenz des zur Energieübertragung genutzten Magnetfelds. Die vorgegebene Frequenz entspricht insbesondere der Betriebsfrequenz, bei der das Energieübertragungssystem betrieben wird bzw. vorgesehen ist, betrieben zu werden. Vorzugsweise beträgt die Schichtdicke der angeordneten zusätzlichen Materialschicht mindestens das Zweifache, mehr bevorzugt das Drei- bis Fünffache, also z.B. mindestens das Dreifache, mindestens das Vierfache oder mindestens das Fünffache, der durch den Skin-Effekt bedingten bzw. in Folge des Skin-Effekts bewirkten Eindringtiefe in das Material der zusätzlichen Materialschicht bei einer vorgegebenen Frequenz des zur Energieübertragung genutzten Magnetfelds beträgt. Bei einer Materialdicke, die der durch den Skin-Effekt bewirkten Eindringtiefe entspricht, sind $1-1/e^1 = 63\%$ der erzeugten Wirbelströme im zusätzlichen hochleitenden Material enthalten. Bei einer Schichtdicke, die dem fünffachen der durch den Skin-Effekt bewirkten Eindringtiefe entspricht, sind $1-1/e^5 = 99{,}33\%$, also ca. 99% der erzeugten Wirbelströme im zusätzlichen hochleitenden Material enthalten. Auf diese Weise werden etwaige Verluste vorteilhafterweise hauptsächlich oder nur noch im zusätzlichen hochleitenden Material erzeugt.

In einer weiteren bevorzugten Ausführungsform weist die zusätzliche elektrisch leitfähige Materialschicht eine relative Permeabilität $\mu_r$ von ungefähr 1 auf. Mit anderen Worten weist die zusätzliche elektrisch leitfähige Materialschicht keine steigernde magnetische Leitfähigkeit auf. Im Rahmen der vorliegenden Erfindung wurde erkannt, dass auf diese Weise etwaige Wirbelstromverluste gering gehalten bzw. minimiert werden können. Diese Erkenntnis geht aus folgender Überlegung hervor: Unter der Annahme, dass die Materialdicke $d_M$ viel größer als die Eindringtiefe $\delta$ ist (also $d_M \gg \delta$),

ist der im Material hervorgerufene Wirbelstrom $I_W$ im Wesentlichen konstant und entspricht z.B. dem Produkt $N \cdot I$ aus Windungszahl $N$ und Strom $I$ einer den Wirbelstrom verursachenden Spule. Ist die Materialdicke $d_M$ viel kleiner als die Eindringtiefe $\delta$ ($d_M \ll \delta$), so durchdringt der magnetische Fluss das Material vollständig und die induzierte Spannung $U_i$ ist nur von der Frequenz $\omega$ abhängig, mit $U_i \sim \omega$. Für $d_M \gg \delta$ können die Wirbelstromverluste $P_V$ wie folgt angegeben werden:

$$P_V = I_W{}^2 \cdot R_{M,eff} \ , \qquad \text{mit} \qquad R_{M,eff} \sim \frac{\rho}{\delta}$$

$$P_V \sim \sqrt{\mu \cdot \omega \cdot \rho} \ .$$

Und für $d_M \ll \delta$ können die Wirbelstromverluste $P_V$ wie folgt angegeben werden:

$$P_V = \frac{U_i{}^2}{R_{M,eff}} \ , \qquad\qquad \text{mit} \qquad R_{M,eff} \sim \frac{\rho}{d_M}$$

$$P_V \sim \frac{\omega^2}{\rho} \ .$$

Folglich können, insbesondere für den in der Praxis vorliegenden Fall $d_M \gg \delta$, die Wirbelstromverluste gering gehalten werden, wenn die zusätzliche elektrisch leitfähige Materialschicht keine steigernde magnetische Leitfähigkeit aufweist, d.h. wenn die absolute magnetische Permeabilität $\mu = \mu_r \cdot \mu_0$ im Wesentlichen der magnetischen Feldkonstante $\mu_0$ entspricht und damit die relative Permeabilität $\mu_r$ der zusätzlichen leitfähigen Materialschicht ungefähr 1 ist.

Alternativ oder zusätzlich wird die zusätzliche elektrisch leitfähige Materialschicht an ein nichtleitendes Material des zumindest einen aktiven Teils angeordnet bzw. darauf aufgebracht, welches in einem Bereich des Energieübertragungssystems angeordnet ist, der zu einem Außenbereich der Energieübertragungsvorrichtung gegenüber dem für die Energieübertragung genutzten Magnetfeld abzuschirmen ist.

In einer weiteren bevorzugten Ausführungsform umfasst der zumindest eine aktive Teil ein Magnetflussführungselement mit einem Ferrit-Polymer-Verbundwerkstoff, wobei die zusätzliche elektrisch leitfähige Materialschicht direkt an das Magnetflussführungselement angeordnet wird.

In einer weiteren bevorzugten Ausführungsform ist die zusätzliche elektrisch leitfähige Materialschicht von dem zumindest einen aktiven Teil isoliert. Alternativ oder zusätzlich ist die zusätzliche elektrisch leitfähige Materialschicht von der elektrischen Maschine elektrisch isoliert. Insbesondere muss die zusätzliche elektrisch leitfähige Materialschicht in der Energieübertragungsvorrichtung elektrisch nicht mit einem aktiven Teil leitend verbunden sein. Mit anderen Worten kann die zusätzliche elektrisch leitfähige Materialschicht elektrisch isoliert von dem zumindest einem aktiven Teil und/oder gegenüber der elektrischen Maschine bzw. gegenüber Komponenten (insbesondere sämtlichen Komponenten) der elektrischen Maschine sein.

In einer weiteren bevorzugten Ausführungsform weist die zusätzliche elektrisch leitfähige Materialschicht eine Schichtdicke auf, so dass die zusätzliche elektrisch leitfähige Materialschicht, insbesondere ausschließlich, ein hochfrequentes intrinsisches Magnetfeld der Energieübertragungsvorrichtung schirmt. Alternativ oder zusätzlich weist die zusätzliche elektrisch leitfähige Materialschicht eine Schichtdicke auf, so dass die zusätzliche elektrisch leitfähige Materialschicht bezüglich eines extrinsischen Magnetfelds der elektrischen Maschine keine Wirkung hat. Mit anderen Worten ist die zusätzliche elektrisch leitfähige Materialschicht in ihrer Schichtdicke innerhalb der Energieübertragungsvorrichtung so ausgeprägt, dass die zusätzliche elektrisch leitfähige Materialschicht lediglich das hochfrequente intrinsische Magnetfeld der Energieübertragungsvorrichtung schirmt und/oder für das extrinsische Magnetfeld der elektrischen Maschine, insbesondere aufgrund einer veränderten Eindringtiefe, keine Wirkung zeigt. Dies kann insbesondere deshalb der Fall sein, weil der zumindest eine äußerlich angeordnete aktive Teil eine Schirmungswirkung gegenüber dem extrinsischen Feld der elektrischen Maschine aufweist, und/oder das extrinsische elektrische Feld derart niederfrequent ist, dass es die Materialien in der Energieübertragungsvorrichtung, einschließlich die zusätzliche elektrisch leitfähige Materialschicht, aufgrund der Eindringtiefe vollständig durchsetzt.

In einer weiteren bevorzugten Ausführungsform umfasst der zumindest eine aktive Teil ein Magnetflussführungselement mit einem Ferrit-Polymer-Verbundwerkstoff, wobei die zusätzliche elektrisch leitfähige Materialschicht direkt an das Magnetflussführungselement angeordnet ist.

In einer weiteren bevorzugten Ausführungsform weist das Energieübertragungssystem einen Stator und einen Rotor auf, wobei der zumindest eine aktive Teil der Energieübertragungsvorrichtung ein Bestandteil des Stators und/oder Rotors des Energieübertragungssystems ist.

In einer weiteren bevorzugten Ausführungsform umfasst bzw. ist der zumindest eine aktive Teil des Energieübertragungssystems eine Rotorwelle, insbesondere eine Stahlwelle, und/oder eine Statorwicklung.

In einer weiteren bevorzugten Ausführungsform ist die Schichtdicke der angeordneten zusätzlichen Materialschicht in Abhängigkeit einer vorbestimmten Frequenz des zur Energieübertragung genutzten Magnetfelds gewählt.

In einer weiteren bevorzugten Ausführungsform ist die Schichtdicke der zusätzlichen Materialschicht derart gewählt, dass Wirbelströme durch das Magnetfeld im Wesentlichen nur bzw. ausschließlich in der zusätzlichen Materialschicht, und nicht in der aktiven Komponente, gebildet werden.

Ein weiterer unabhängiger Aspekt zur Lösung der Aufgabe betrifft eine elektrisch erregte Maschine, umfassend:

- einen Maschinen-Stator; und
- eine erfindungsgemäße Anordnung, d.h. insbesondere einen Maschinen-Rotor und eine Erregereinrichtung zur elektrischen Erregung der Maschine, wobei die Erregereinrichtung zumindest ein Energieübertragungssystem umfasst, welches in dem Rotor der Maschine integriert ist.

Die elektrisch erregte Maschine kann z.B. eine Synchronmaschine oder eine Transversalflussmaschine sein.

Insbesondere betrifft somit ein weiterer unabhängiger Aspekt zur Lösung der Aufgabe eine elektrisch erregte Synchronmaschine, umfassend:

- einen Synchronmaschinen-Stator; und
- eine erfindungsgemäße Anordnung, d.h. insbesondere einen Synchronmaschinen-Rotor und eine Erregereinrichtung zur elektrischen Erregung der Synchronmaschine, wobei die Erregereinrichtung zumindest ein Energieübertragungssystem umfasst, welches in dem Rotor der Synchronmaschine integriert ist.

Ferner betrifft insbesondere ein weiterer unabhängiger Aspekt zur Lösung der Aufgabe eine Transversalflussmaschine, umfassend:

- einen Transversalfluss-Stator; und
- eine erfindungsgemäße Anordnung, d.h. insbesondere einen Transversalfluss-Rotor und eine Erregereinrichtung zur elektrischen Erregung der Transversalflussmaschine, wobei die Erregereinrichtung zumindest ein Energieübertragungssystem umfasst, welches in dem Rotor der Transversalflussmaschine integriert ist.

Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen unabhängigen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll.

Kurze Beschreibung der Zeichnungen

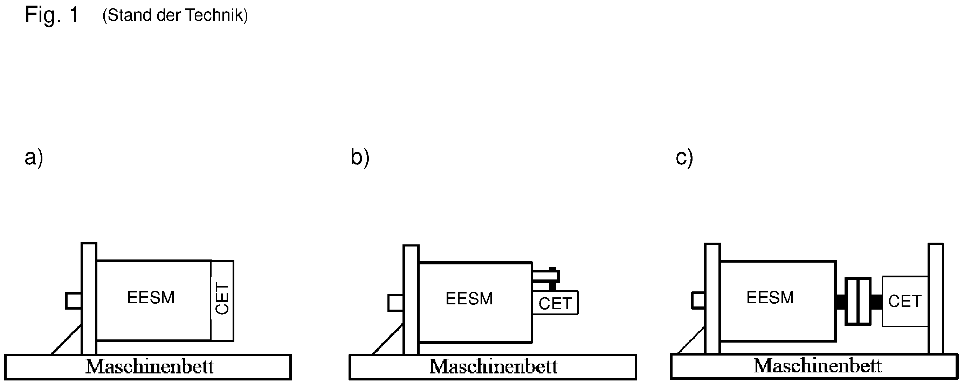

Figuren 1a bis 1c   zeigen jeweils eine schematische Zeichnung einer herkömmlichen elektrisch erregten Synchronmaschine;

| Figur 2 | zeigt eine schematische Schnitt-Zeichnung einer elektrisch erregten Synchronmaschine gemäß einer bevorzugten Ausführungsform der vorliegenden Erfindung; |
|---|---|
| Figur 3 | zeigt eine schematische Schnitt-Zeichnung einer elektrisch erregten Synchronmaschine gemäß einer weiteren bevorzugten Ausführungsform der vorliegenden Erfindung; |
| Figur 4a | zeigt eine schematische Zeichnung einer elektrisch erregten Synchronmaschine gemäß einer bevorzugten Ausführungsform der vorliegenden Erfindung in einer Seitenansicht; |
| Figur 4b | zeigt einen Schnitt J-J der Synchronmaschine von Figur 4a; |
| Figur 4c | zeigt einen vergrößerten Ausschnitt K der Figur 4b; |
| Figur 5a | zeigt einen Schnitt G-G der Synchronmaschine von Figur 4a; |
| Figur 5b | zeigt eine vergrößerte Darstellung eines Ausschnittes H von Figur 5a; |
| Figur 6 | zeigt eine schematische Zeichnung zum Prinzip einer in den Synchronmaschinen-Rotor integrierten bzw. integrierbaren induktiven Energieübertragungsstrecke; |
| Figur 7 | zeigt eine schematische Zeichnung einer elektrisch erregten Maschine mit einer Beschaltung gemäß einer bevorzugten Ausführungsform der vorliegenden Erfindung; |
| Figur 8 | zeigt ein Ersatzschaltbild einer Erregereinrichtung bzw. eines Energieübertragungssystems gemäß einer bevorzugten Ausführungsform der vorliegenden Erfindung; |
| Figur 9 | zeigt verschiedene Schaltungen für eine primärseitige Kompensation eines Spulensystems. |

Detaillierte Beschreibung der Zeichnungen

Die **Figuren 1a bis 1c** zeigen jeweils eine schematische Zeichnung einer herkömmlichen elektrisch erregten Synchronmaschine (EESM). Die elektrisch erregte Synchronmaschine ist auf einem Maschinenbett angeordnet. Um Energie auf den Rotor der elektrisch erregten Synchronmaschine zu bekommen, wird bisher in den meisten Fällen ein Schleifringsystem verwendet. Alternativ sind auch kontaktlose Energieübertragungssysteme (CET) in der Entwicklung und Prototypenphase. Unabhängig vom verwendeten Energieübertragungssystem, wird dieses herkömmlicherweise seitlich in axialer Richtung an den aktiven Teil der Synchronmaschine angebracht. Somit vergrößert das für eine EESM erforderliche Energieübertragungssystem den Bauraum in axialer Richtung. In den Figuren 1a bis 1c sind Beispiele für die typische Anbringung eines kontaktlosen Energieübertragungssystems (CET) an eine EESM dargestellt. Anstelle des in diesen Figuren jeweils dargestellten kontaktlosen Energieübertragungssystems kann auch ein Schleifringsystem verwendet werden. Die Abkürzung CET soll hier also stellvertretend auch für ein Schleifringsystem stehen. Die in den Figuren 1a bis 1c gezeigten Beispiele unterscheiden sich in der Art der Lagerung. Im Ausführungsbeispiel der Figur 1a wird für das Übertragungssystem das Lager der Synchronmaschine mitverwendet, wobei das Übertragungssystem selbst nicht extra gelagert ist. Das Übertragungssystem von Figur 1b ist selbst gelagert und damit unabhängig von der Synchronmaschine. Um ein durch Lagerreibung verursachtes Mitrotieren des Stators des Übertragungssystems zu verhindern, ist dieses mittels eines Stifts an der Synchronmaschine befestigt. In der Figur 1c ist ein Übertragungssystem gezeigt, welches selbst gelagert und zudem mit einer Kupplung von der Synchronmaschine getrennt aufgebaut ist. Daher muss das Übertragungssystem komplett eigenständig befestigt sein.

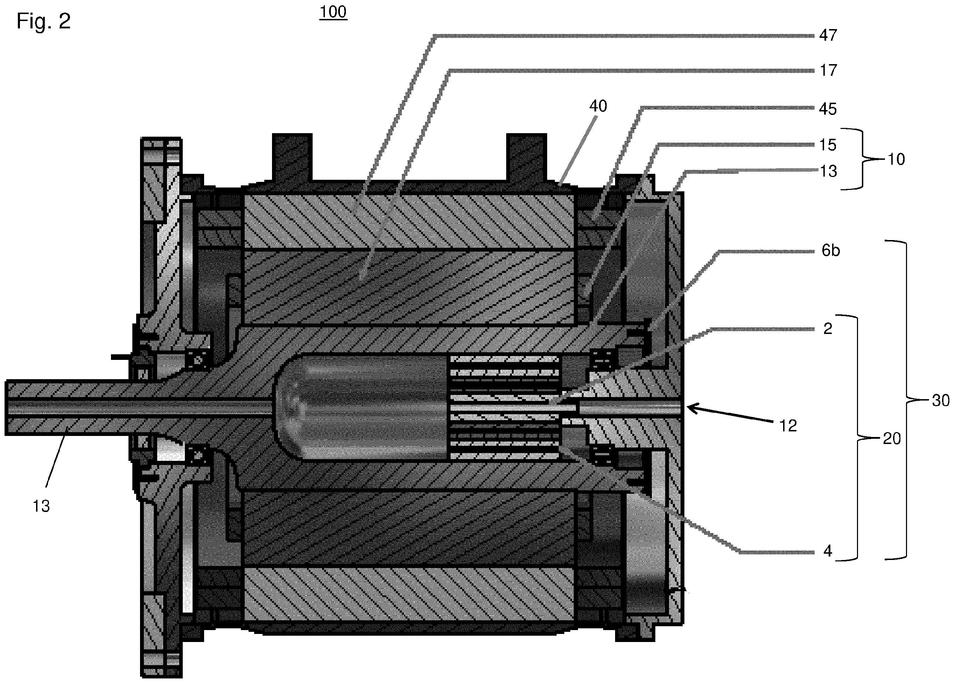

Die **Figur 2** zeigt eine schematische Querschnittszeichnung (CAD-Zeichnung) einer elektrisch erregten Synchronmaschine 100 gemäß einer bevorzugten Ausführungsform der vorliegenden Erfindung. Die Synchronmaschine 100 umfasst einen Synchronmaschinen-Rotor 10, einen Synchronmaschinen-Stator 40 und eine Erregereinrichtung 30. Die Synchronmaschine 100 ist als Innenläufer ausgebildet, d.h. der Synchronmaschinen-Rotor 10 ist vom Synchronmaschinen-Stator 40 räumlich umgeben. Mit anderen Worten ist der Synchronmaschinen-Rotor 10 im Inneren Synchronmaschine 100 angeordnet, während der Synchronmaschinen-Stator 40 im Äußeren der Synchronmaschine 100 angeordnet ist. Insbesondere ist der Synchronmaschinen-Rotor 10 in einem Hohlraum des Synchronmaschinen-Stators 40 angeordnet. Der Synchronmaschinen-Rotor 10 weist eine Synchronmaschinen-Rotorwicklung 15 auf, die auf Grund ihrer Funktion innerhalb der elektrisch erregten Synchronmaschine 100 auch als Erregerwicklung 15 bezeichnet wird. Entsprechend weist der Synchronmaschinen-Stator 40 eine Synchronmaschinen-Statorwicklung 45 auf.

Die Erregereinrichtung 30 dient zur elektrischen Erregung der Synchronmaschine 100 bzw. des Synchronmaschinen-Rotors 10 der Synchronmaschine 100. Die Erregereinrichtung 30 umfasst ein Energieübertragungssystem 20, welches in dem Synchronmaschinen-Rotor 10 integriert ist. Der Synchronmaschinen-Rotor 10 weist eine Synchronmaschinen-Rotorwelle 13 und eine Erregerwicklung 15 auf. Das Energieübertragungssystem 20 der Erregereinrichtung 30 ist in einem Hohlraum der Synchronmaschinen-Rotorwelle 10 angeordnet.

Das Energieübertragungssystem 20 ist gemäß der in Figur 2 gezeigten Ausführungsform ein kontaktloses bzw. induktives Energieübertragungssystem. Das Energieübertragungssystem 20 umfasst bzw. ist eine rotierende Energieübertragungsvorrichtung. Das Energieübertragungssystem 20 bzw. die Energieübertragungsvorrichtung umfasst einen Erreger-Stator 2 und einen Erreger-Rotor 4. Dabei umgibt der Erreger-Rotor 4 räumlich den Erreger-Stator 2. Mit anderen Worten ist der Erreger-Stator im Inneren des Energieübertragungssystems 20 angeordnet, während der Erreger-Rotor im Äußeren des Energieübertragungssystems 20 angeordnet ist. Insbesondere ist der Erreger-Stator 2 in einem Hohlraum des Erreger-Rotors 4 angeordnet. Das Energieübertragungssystem 20 ist somit als Außenläufer ausgebildet.

Das Energieübertragungssystem 20 ist im Synchronmaschinen-Rotor 10 insbesondere derart angeordnet, dass der Erreger-Rotor 4 drehfest mit dem Synchronmaschinen-Rotor 10 verbunden ist. Somit dreht sich der Erreger-Rotor 4 mit dem Synchronmaschinen-Rotor 10 mit. Mit anderen Worten sind der Erreger-Rotor 4 und der Synchronmaschinen-Rotor 10 derart angeordnet und/oder miteinander gekoppelt bzw. verbunden, dass der Erreger-Rotor 4 und der Synchronmaschinen-Rotor 10 in ihren Drehbewegungen synchronisiert sind. Der Erreger-Rotor 4 und der Synchronmaschinen-Rotor 10 weisen folglich im Betriebszustand dieselbe Winkelgeschwindigkeit und/oder Drehzahl auf.

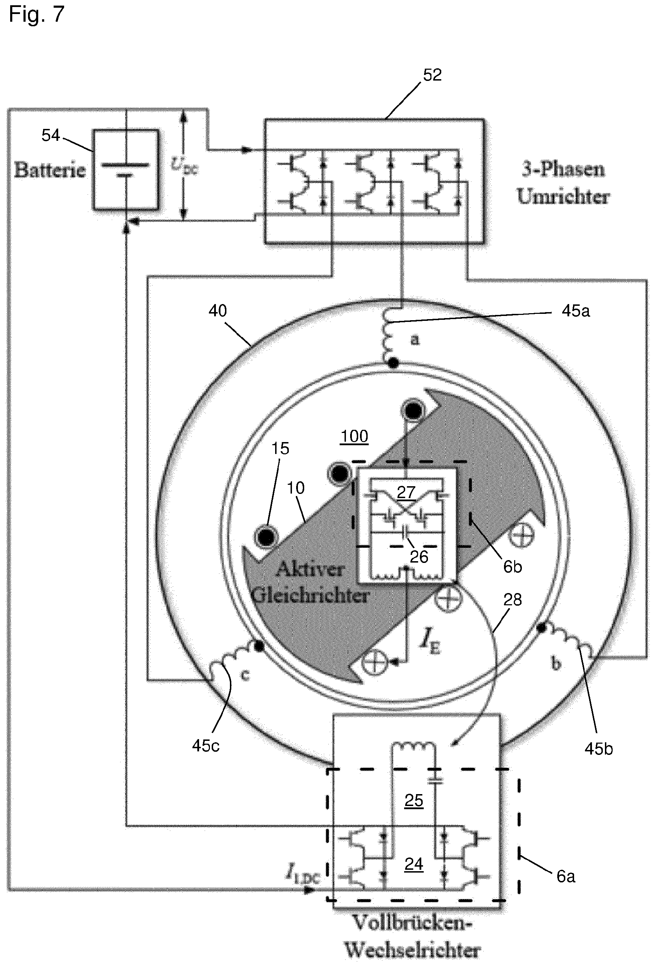

Die Erregereinrichtung 30 ist ausgelegt, um elektrische Energie kontaktlos von dem Erreger-Stator 2 auf den Erreger-Rotor 4 der Erregereinrichtung 30, und schließlich vom Erreger-Rotor 4 auf die Erregerwicklung 15 des Synchronmaschinen-Rotors 10 zu übertragen. Die Erregereinrichtung 30 umfasst ferner eine Elektronikeinrichtung 6, welche eine primärseitige Elektronikeinrichtung 6a und eine sekundärseitige Elektronikeinrichtung 6b umfasst (siehe hierzu auch die Figuren 7 bis 9). In der Figur 2 ist lediglich die sekundärseitige Elektronikeinrichtung 6b ersichtlich, welche an und/oder außerhalb der Synchronmaschinen-Rotorwelle 13 angeordnet ist. Insbesondere umfasst die sekundärseitige Elektronikeinrichtung 6b ein oder mehrere Kondensatoren zur Kompensation der Blindleistung. Alternativ oder zusätzlich kann die sekundärseitige Elektronikeinrichtung 6b einen Gleichrichter umfassen. Mit Hilfe des Gleichrichters kann eine von dem Energieübertragungssystem 20 erzeugte Wechselspannung gleichgerichtet werden, um die Erregerwicklung 15 des Synchronmaschinen-Rotors 10 mit Gleichspannung zu versorgen bzw. um in die Erregerwicklung 15 des Synchronmaschinen-Rotors 10 Gleichstrom einzuspeisen, und somit ein Magnetfeld zu erzeugen.

Der Synchronmaschinen-Rotor 10 weist ferner ein Magnetflussführungselement 17 auf. Entsprechend weist der Synchronmaschinen-Stator 40 ferner ein Magnetflussführungselement 47 auf. Das Magnetflussführungselement 17 des Synchronmaschinen-Rotors 10 ist zwischen dem Magnetflussführungselement 47 des Synchronmaschinen-Stators 40 und der Synchronmaschinen-Rotorwelle 13 angeordnet. Das Magnetflussführungselement 17 dient zum Führen des magnetischen Flusses auf dem Synchronmaschinen-Rotor 10, und das Magnetflussführungselement 47 dient zum Führen des magnetischen Flusses auf dem Synchronmaschinen-Stator 40.

Um etwaige Verluste, z.B. durch Wirbelströme und/oder Erwärmung, zu reduzieren, ist der Erreger-Stator 2 vorzugsweise aus einem sowohl magnetisch nicht leitenden als auch elektrisch nicht leitenden Material (insbesondere aus einem Kunststoff wie z.B. POM oder PEEK) ausgebildet. Dies ist vorteilhafterweise möglich, da an den Erreger-Stator 2 des Energieübertragungssystems 20 keine besonderen Stabilitätsanforderungen gestellt sind. Auf dem Erreger-Stator 2 müssen lediglich Wicklungen aufgebracht werden können. Es ist aber natürlich auch möglich, den Erreger-Stator 2 aus Stahl oder Aluminium zu fertigen. In diesem Fall ist es vorteilhaft, eine zusätzliche hochleitende elektrische Schicht auf den Erreger-Stator 2 aufzubringen.

Der Erreger-Stator 2 weist eine Bohrung entlang seiner Längsachse auf, welche einen Kühlungskanal ausbildet. Mit anderen Worten ist der Erreger-Stator 2 hohl bzw. rohrförmig ausgebildet. In den Kühlungskanal kann über einen Einlass 12 ein Kühlmittel wie z.B. Luft, Wasser und/oder Öl eingelassen werden. Das Kühlmittel kann sich durch den Kühlungskanal des Erreger-Stators 2 bewegen und somit den Erreger-Stator 2 in effektiver Weise von innen kühlen. Vorteilhafterweise wird dadurch auch der Synchronmaschinen-Rotor 10 von innen gekühlt. Der Einlass 12 kann zugleich auch als Auslass des Kühlmittels dienen.

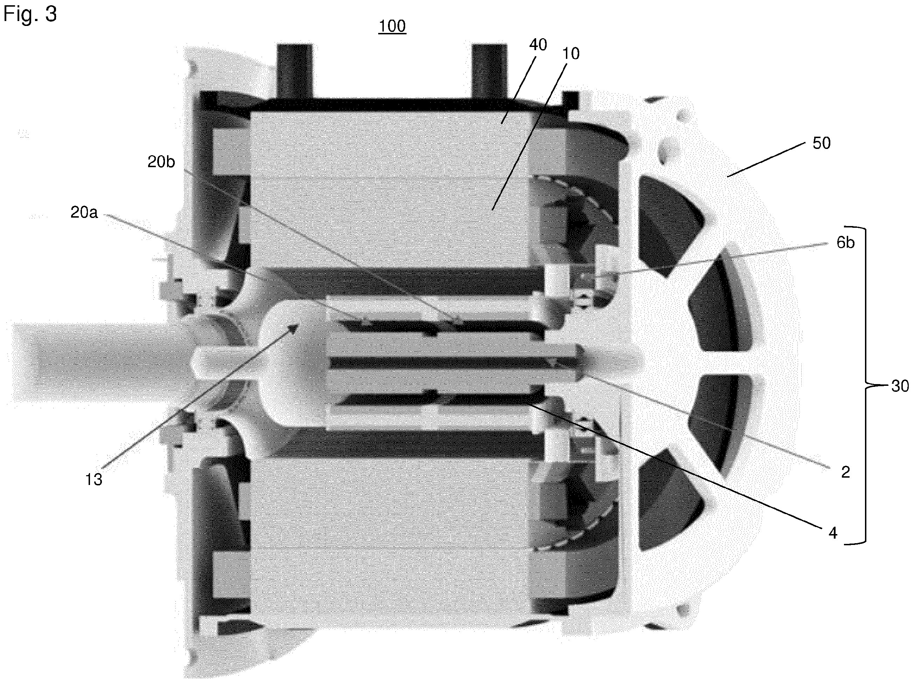

Die **Figur 3** zeigt eine schematische Zeichnung einer elektrisch erregten Synchronmaschine 100 gemäß einer weiteren bevorzugten Ausführungsform der vorliegenden Erfindung. Wie in Figur 2 weist auch die Synchronmaschine 100 der Figur 3 einen Synchronmaschinen-Rotor 10, einen Synchronmaschinen-Stator 40 und eine Erregereinrichtung 30 auf. Ferner ist auch ein Deckel 50 der Synchronmaschine 100 erkennbar. Im Unterschied zur Figur 2 umfasst die Erregereinrichtung 30 der Figur 3 jedoch zwei Energieübertragungssysteme 20a und 20b, welche jeweils im Synchronmaschinen-Rotor 10 integriert sind. Beide Energieübertragungssysteme 20a und 20b sind in einem Hohlraum der Synchronmaschinen-Rotorwelle 13 angeordnet. Alternativ könnte z.B. das zweite Energieübertragungssystem 20b auch ein Datenübertragungssystem sein. Es versteht sich, dass allgemein auch eine Vielzahl von Energieübertragungssystemen und/oder eine Vielzahl von Datenübertragungssystemen im Synchronmaschinen-Rotor 10 bzw. im Hohlraum der Synchronmaschinen-Rotorwelle 13 integriert sein können.

Eine Herausforderung bei der Konstruktion der Synchronmaschine mit integriertem Energieübertragungssystem ist insbesondere auch die mechanische Lagerung der Nichtabtriebsseite (rechte Seite in Figur 3) der Synchronmaschine 100. Insbesondere kann ein baugleiches Lager wie auf der Abtriebsseite (linke Seite in Figur 3) verwendet werden, jedoch dreht sich beim Lager der Nichtabtriebsseite ein äußerer Teil des Lagers, während ein innerer Teil des Lagers steht. Ein feststehendes Element, auf welchem das Lager angebracht ist (wie z.B. der Deckel 50) weist vorzugsweise eine oder mehrere Öffnungen auf, um einerseits eine Durchführung der Verbindung zum stehenden Teil bzw. zum Erreger-Stator 2 des Energieübertragungssystems 20 zu ermöglichen, und andererseits um eine Luftzirkulation zu ermöglichen, so dass sich die Wärme im Inneren des Rotors 10 bzw. der Rotorwelle 13 der Maschine 100 nicht staut. Ferner weist auch die Rotorwelle 13 vorzugsweise eine oder mehrere Öffnungen zur Durchführung von Leitungen auf.

Alternativ oder zusätzlich kann die Rotorwelle 13 eine oder mehrere Kühl-Öffnungen zur Durchführung von Luft und/oder Ölnebel aufweisen.

Das Energieübertragungssystem 20 umfasst eine Primärseite (stehender Teil bzw. Stator 2) und eine Sekundärseite (rotierender Teil bzw. Rotor 4). Der übliche Aufbau, d.h. mit Außenstator und Innenrotor, ist in diesem Fall umgekehrt: Die Primärseite des Energieübertragungssystems 20 ist in Verlängerung der Rotationsachse der Abtriebswelle 13 der Synchronmaschine 100 angeordnet und innerhalb der Sekundärseite des Energieübertragungssystems 20 eingebracht. Die Kabelführung zur Primärseite kann dabei durch ein oder mehrere Öffnungen eines (Lager-)Deckels 50 der Nichtabtriebsseite (in der Figur 3 rechts) verlaufen. Die primärseitige Elektronik 6a zur Ansteuerung der Primärseite ist in den Figuren 7 bis 9 dargestellt. Diese kann sowohl außerhalb der Maschine 100, in die Leistungselektronik der Maschine 100 oder in den Mantel der Maschine 100 integriert sein.

Bei der rotierenden Sekundärseite sind die Wicklungen innenliegend, gefolgt von einer magnetischen Flussführung (z.B. eine verformbare Matte aus gepresstem Ferritkomposite) und einem elektrisch hochleitenden Material (z.B. Kupfer) zur Schirmung radial nach außen. Die Elektronik 6b der Sekundärseite umfasst insbesondere Kapazitäten zur Blindleistungskompensation und einen Gleichrichter. Der Gleichrichter kann ein passiver Vollbrückengleichrichter, ein aktiver Halbbrückengleichrichter oder eine Mischform (umfassend einen aktiven Transistor und eine passive Diode pro Zweig) sein. Da die Elektronikkomponenten die thermisch anfälligsten Bauteile sind, ist eine die Elektronikkomponenten aufweisende Platine vorzugsweise am Rand des Maschinen-rotors 10 angebracht. Damit ist sie entfernt von den zwei thermischen Hotspots, nämlich dem Energieübertragungssystem 20 im Rotor 10 und den Rotorwicklungen 15 der Synchronmaschine 100. Die sekundärseitige Elektronikeinrichtung bzw. Platine 6b kann durch natürliche oder erzwungene Konvektion gekühlt werden. Zudem kann die sekundärseitige Elektronikeinrichtung 6b durch thermisch schwach leitende Materialien (z.B. Kunststoff wie POM oder PEEK) thermisch von der Synchronmaschinen-Rotorwelle 13 entkoppelt sein, da diese bei elektrischen Maschinen typischerweise für die Bauteile unzulässige Temperaturen hat. Die Verbindung von Sekundärseite zur sekundärseitigen Elektronik erfolgt vorzugsweise mittels Durchführungen bzw. Öffnungen der Synchronmaschinen-Rotorwelle 13. Dabei bieten zusätzliche Kühl-Öffnungen die Möglichkeit eines Luftstromes innerhalb des Energieübertragungssystems 20, so dass sich die Wärme innerhalb des Synchronmaschinen-Rotors 10 bzw. der Synchronmaschinen-Rotorwelle 13 nicht staut. In einer bevorzugten Ausführungsform wird ein zusätzlicher Kühlkörper, insbesondere in Form eines Ringes, für die sekundärseitige Elektronikeinrichtung 6b angebracht. Dieser Kühlkörper ist vorzugsweise von der Rotorwelle 13 durch schlechtleitende bzw. thermisch isolierende Materialien isoliert.

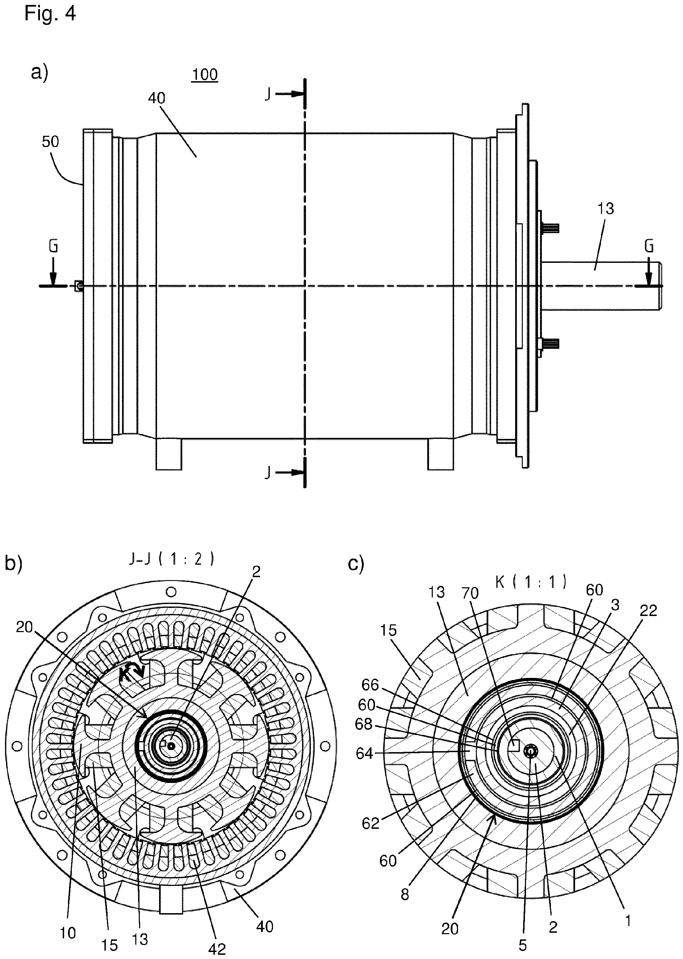

Die **Figur 4a** zeigt eine Seitenansicht einer elektrisch erregten Synchronmaschine 100 mit einer Synchronmaschinen-Rotorwelle 13, einem Synchronmaschinen-Stator 40 und einen Deckel 50 gemäß einer bevorzugten Ausführungsform der vorliegenden Erfindung. Der Deckel 50 weist vorzugsweise Öffnungen auf (in der Figur 4a nicht zu sehen), welche zur Wärmeabfuhr bzw. zur Kühlung der Synchronmaschine 100 dienen. Die gestrichelten Linien G-G und J-J kennzeichnen Schnittebenen, welche in den nachfolgenden Figuren 4b bis 5b veranschaulicht werden.

Die **Figur 4b** zeigt eine schematische Schnittzeichnung J-J der elektrisch erregten Synchronmaschine 100 von Figur 4a. In dieser Schnittzeichnung sind Nuten 42 im Synchronmaschinen-Stator 40 sowie einzelne Pole des Synchronmaschinen-Rotors 10 erkennbar. Ferner ist auch die Rotorwelle 13 und die Rotorwicklung 15 der Synchronmaschine (Erregerwicklung) ersichtlich. Im Inneren der Rotorwelle 13 befindet sich zumindest ein Energieübertrager 20, wobei im Zentrum des Energieübertragers 20 ein Erreger-Stator 2 des Energieübertragers 20 angeordnet ist.

Die **Figur 4c** zeigt eine Vergrößerung des Ausschnitts K von Figur 4b. Das innerhalb der Synchronmaschinen-Rotorwelle 13 angeordnete zumindest eine Energieübertragungssystem 20 weist von außen nach innen folgende Bestandteile auf: eine zusätzliche elektrisch hochleitende Schicht 8 (insbesondere eine Kupferschicht), einen Kleber 60, eine Kunststoffhalterung 62 mit einem integrierten flussführenden Material (insbesondere ein flussführendes Komposit) und einer Aussparung 64 für die Rückführung der Erreger-Rotorwicklung 3, einen Kleber 60, die Erreger-Rotorwicklung 3, einen Luftspalt 22, eine Kunststoffhülle 66, einen Kleber 60, eine Bandage 68, die Erreger-Statorwicklung 1, und der Erreger-Stator 2 mit einem Rückführungselement 70 zur Rückführung der Erreger-Statorwicklung 1. Ferner ist im Zentrum bzw. im Stator 2 des zumindest einen Energieübertragers 20 ein Kühlungskanal 5 (insbesondere ein Wasserkanal) zur aktiven Kühlung des Stators 2 des Energieübertragungssystems 20 erkennbar. Sofern zweilagig (hin und zurück) gewickelt wurde, kann auf das Rückführungselement 70 verzichtet werden. Der Kühlungskanal 5 kann in diesem Fall entsprechend größer ausgebildet werden,

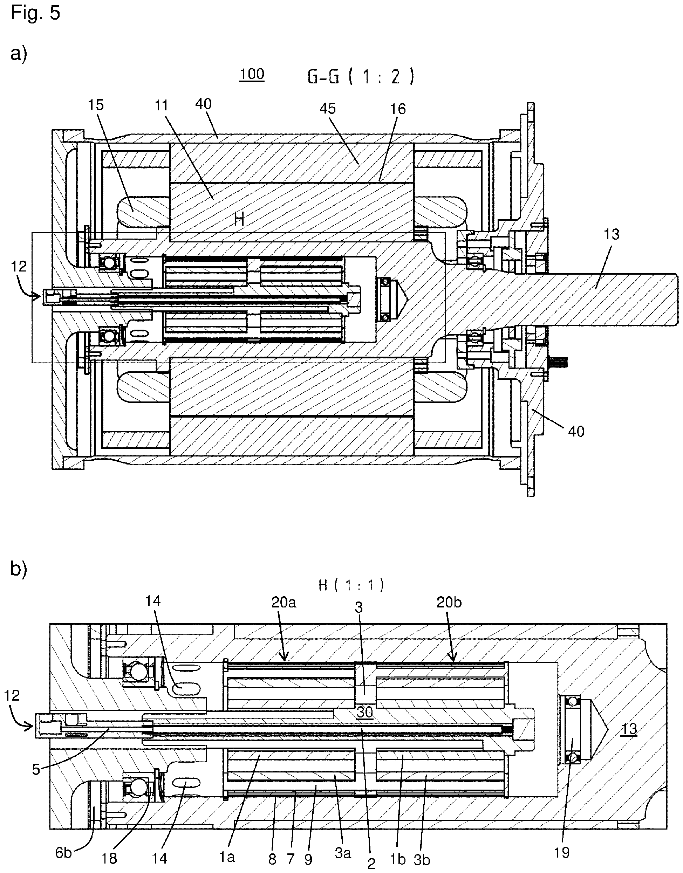

Die **Figur 5a** zeigt eine schematische Schnittzeichnung G-G der elektrisch erregten Synchronmaschine 100 von Figur 4a. Neben einem in der Figur 5b vergrößert dargestellten Ausschnitt H, welcher die Erregereinrichtung 30 der Synchronmaschine 100 umfasst, weist die Synchronmaschine 100 insbesondere eine Rotorwicklung 15, ein Blechpaket 11 des Synchronmaschinen-Rotors und einen Synchronmaschinen-Stator 40 mit einer Statorwicklung 45 auf. Das Blechpaket 11 ist von der Statorwicklung 45 durch einen Luftspalt 16 getrennt bzw. beabstandet.

Die **Figur 5b** zeigt eine vergrößerte Darstellung des Ausschnittes H von Figur 5a. Insbesondere zeigt die Figur 5b eine schematische Schnitt-Zeichnung einer beispielhaften Erregereinrichtung 30, welche zwei Energieübertragungssysteme 20a und 20b umfasst. Beide Energieübertragungssysteme 20a und 20b sind in einem Hohlraum der Synchronmaschinen-Rotorwelle 13 angeordnet. Die Energieübertragungssysteme 20a und 20b weisen einen gemeinsamen Erreger-Stator 2 und einen gemeinsamen Erreger-Rotor 3 (bzw. einen gemeinsamen Träger, auf dem sämtliche Erreger-Rotoren, in diesem Beispiel also zwei, montiert sind) auf. Der gemeinsame Erreger-Rotor 3 (bzw. der gemeinsame Träger der Erreger-Rotoren) ist mit der Synchronmaschinen-Rotorwelle 13 mechanisch bzw. drehfest verbunden. Das erste Energieübertragungssystem 20a weist eine erste Statorwicklung 1a und eine erste Rotorwicklung 3a auf. Entsprechend weist das zweite Energieübertragungssystem 20b eine zweite Statorwicklung 1b und eine zweite Rotorwicklung 3b auf. Die erste und zweite Statorwicklung 1a und 1b sind elektrisch voneinander getrennt. Ferner sind auch die erste und zweite Rotorwicklung 3a und 3b elektrisch voneinander getrennt. Die sekundärseitige Elektronikeinrichtung 6b der Erregereinrichtung 30 ist vorzugsweise ausgelegt, sämtliche Energieübertragungssysteme, im hier gezeigten Beispiel also das erste Energieübertragungssystem 20a und das zweite Energieübertragungssystem 20a, sowie etwaige vorhandene Datenübertragungssysteme zu steuern bzw. zu kontrollieren. Die sekundärseitige Elektronikeinrichtung 6b ist an der Synchronmaschinen-Rotorwelle 13, aber außerhalb des Hohlraums der Synchronmaschinen-Rotorwelle 13 (in dem sich die Energieübertragungssysteme 20a und 20b befinden) angeordnet. Auf diese Weise kann die Temperatur im Hohlraum der Synchronmaschinen-Rotorwelle 13 möglichst gering gehalten werden. Zur Verbindung der sekundärseitigen Elektronikeinrichtung 6b mit den Übertragungssystemen weist die Synchronmaschinen-Rotorwelle 13 eine Kabeldurchführung vom Hohlraum der Synchronmaschinen-Rotorwelle 13 nach außen auf.

Wie bereits weiter oben erläutert, kann es vorteilhaft sein, an diversen Stellen der erfindungsgemäßen Anordnung bzw. der erfindungsgemäßen Synchronmaschine 100, insbesondere im Bereich der Erregereinrichtung 30 wie z.B. an zumindest einen aktiven Teil des Energieübertragungssystems 20a bzw. 20b eine zusätzliche elektrisch leitfähige Materialschicht 8 (insbesondere aus Kupfer) anzuordnen. Unter einem aktiven Teil des Energieübertragungssystems wird ein Teil des Energieübertragungssystems verstanden, welcher zumindest teilweise einem zur Energieübertragung genutzten Magnetfeld ausgesetzt ist. Die elektrische Leitfähigkeit der zusätzlichen Materialschicht 8 ist größer als die elektrische Leitfähigkeit des zumindest einen aktiven Teils. Ist der Erreger-Stator 2 aus Stahl gefertigt, so ist es vorteilhaft, eine solche zusätzliche elektrisch leitfähige Materialschicht 8 beispielsweise am Erreger-Stator 2 anzuordnen. Denn in diesem Fall können unerwünschte Wirbelstromverluste und/oder thermische Verluste reduziert bzw. vermieden werden. Alternativ oder zusätzlich kann eine zusätzliche elektrisch leitfähige Materialschicht 8 auch am Erreger-Rotor 4 (siehe die Figuren 2, 3 und 6) und/oder an magnetflussführenden Elementen bzw. magnetflussführenden Materialien 7 der Synchronmaschine 100 bzw. des Energieübertragungssystems 20a, 20b angeordnet werden oder sein. Wie in den Figuren 5a und 5b ersichtlich, kleidet die zusätzliche elektrisch leitfähige Materialschicht 8 den ganzen Hohlraum der Synchronmaschinen-Rotorwelle 13 aus.

Wie ferner in den Figuren 5a und 5b ersichtlich, kann die elektrisch erregte Synchronmaschine 100 zudem einen Einlass und/oder Auslass 12 für ein Kühlmittel (z.B. Wasser) aufweisen, welcher mit einem Kühlungskanal 5 des Erreger-Stators 2 verbunden ist. Durch eine Zirkulation des Kühlmittels kann somit der Erreger-Stator 2 von innen aktiv gekühlt werden. Ferner kann, wie in der Figur 5b ersichtlich, die Synchronmaschinen-Rotorwelle 13 mehrere Öffnungen bzw. Luftlöcher 14 zur Kühlung der Erregereinrichtung 30 bzw. der Energieübertragungssysteme 20a und 20b mit Luft aufweisen. Des Weiteren ist in der Figur 5b eine Lagerung der Erregereinrichtung 30 in der Synchronmaschinen-Rotorwelle 13 mit Hilfe von Lagern 18 und 19 erkennbar.

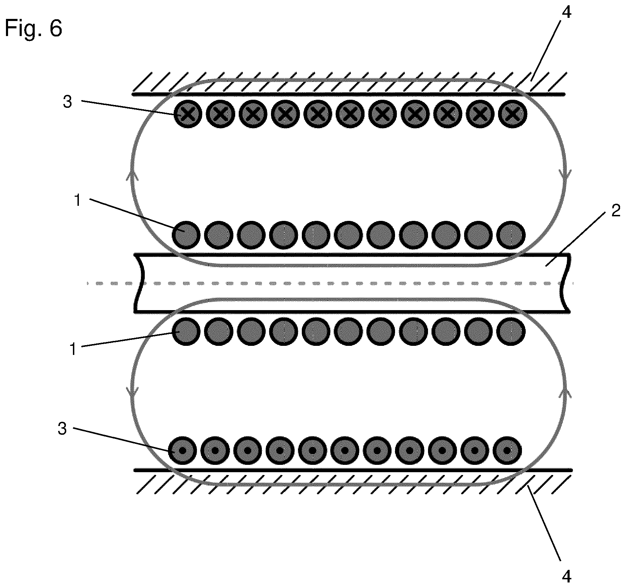

Die **Figur 6** zeigt eine schematische Zeichnung zum Prinzip einer in den Synchronmaschinen-Rotor bzw. einer Synchronmaschinen-Rotorhohlwelle 13 integrierten bzw. integrierbaren induktiven Energieübertragungsstrecke 20. Insbesondere zeigt Figur 6 eine beispielhafte Wicklungsanordnung von Statorwicklung 1 und Rotorwicklung 3 des Energieübertragungssystems 20 zum Erzeugen eines für die Energieübertragung genutzten Magnetfeldes. Das Wicklungsschema ist grundsätzlich frei wählbar. In der Figur 6 ist eine besonders vorteilhafte Ausführungsform für einen dünnen, länglichen Bauraum, wie er z.B. innerhalb eines Rotors vorhanden ist, dargestellt. Die geschlossenen Linien mit den Pfeilen deuten den magnetischen Fluss an.

Die **Figur 7** zeigt eine schematische Zeichnung einer elektrisch erregten Maschine 100 mit einer Beschaltung gemäß einer bevorzugten Ausführungsform der vorliegenden Erfindung. Die elektrisch erregte Maschine 100 umfasst einen Maschinen-Stator 40 mit einer Statorwicklung 45 bzw. Statorwicklungen 45a, 45b und 45c, sowie einen Maschinen-Rotor 10 mit einer Rotorwicklung 15. In dem Maschinenrotor 10 bzw. in einem Hohlraum des Maschinenrotors 10 ist ein Energieübertragungssystem 20 bzw. ein Spulensystem 28 des Energieübertragungssystems 20 angeordnet. Das Energieübertragungssystem 20 zusammen mit einem Wechselrichter 24, einer optionalen primärseitigen Blindleistungskompensationsschaltung 25, einem Gleichrichter 26 und einer optionalen sekundärseitigen Blindleistungskompensationsschaltung 27 bilden eine Erregereinrichtung 30 zur elektrischen Erregung der Maschine 100. Der Wechselrichter 24 zusammen mit der optionalen primärseitigen Blindleistungskompensationsschaltung 25 bilden eine primärseitige Elektronikeinrichtung 6a. Der Gleichrichter 26 zusammen mit der optionalen sekundärseitigen Blindleistungskompensationsschaltung 27 bilden eine sekundärseitige Elektronikeinrichtung 6b. Der Gleichrichter 26, vorzugsweise ein aktiver Gleichrichter, ist mit der Rotorwicklung 15 der Maschine 100 verbunden, so dass die Rotorwicklung 15 mit einer Gleichspannung bzw. einem Gleichstrom versorgt werden kann. Der Wechselrichter 24 (einphasig), vorzugsweise ein Vollbrücken-Wechselrichter, ist mit einer Batterie 54 verbunden. Die Batterie 54 dient als Energiequelle und/oder als Energiespeicher. Die Batterie 54 ist zudem mit einem Umrichter 52 zur Steuerung der elektrisch erregten Maschine 100, beispielsweise einem 3-Phasen Umrichter verbunden. Der Umrichter 52 ist ferner mit der Statorwicklung 45 bzw. den Statorwicklungen 45a, 45b und 45c der Maschine 100 verbunden. Wie im Beispiel der Figur 7 gezeigt, kann der Wechselrichter 24 mit einer primärseitigen Kompensationsschaltung 25 für das Energieübertragungssystem 20 kombiniert werden. Entsprechend kann der Gleichrichter 26 mit einer sekundärseitigen Kompensationsschaltung 27 für das Energieübertragungssystem 20 kombiniert werden. Der Wechselrichter bzw. Umrichter 52 für die elektrisch erregte Maschine 100 kann mit einer Betriebsfrequenz A betrieben werden, während der Wechselrichter 26 für das Energieübertragungssystem 20 mit einer Betriebsfrequenz B betrieben werden kann. Die Betriebsfrequenzen A und B können sich dabei unterscheiden, was üblicherweise auch der Fall ist. Die Betriebsfrequenz des Wechselrichters 26 für das Energieübertragungssystem 20 ist somit unabhängig von der Drehzahl der Maschine 100.

Die erfindungsgemäße Anordnung dient also insbesondere der Rotorerregung einer elektrischen Maschine 100, um ein statisches Magnetfeld aufzubauen und damit eine Rotation des Maschinenrotors 10 zu bewirken. Mit Hilfe der erfindungsgemäßen Anordnung sind insbesondere alle vier Quadranten einer elektrischen Maschine als Motor und Generator ohne externe Kräfte anfahrbar. Mit anderen Worten ist mit der hier beschriebenen Anordnung ein Vier-Quadranten-Betrieb möglich. Die elektrische Maschine 100, welche mit Hilfe der Erregereinrichtung 30 erregt wird, kann also insbesondere sowohl als Motor als auch als Generator verwendet werden. Das Spulensystem 28 ist vorzugsweise einphasig und ist in seiner Betriebsfrequenz unabhängig von der Drehzahl der Maschine 100.

Auch wenn in der Figur 7 eine dreiphasige Maschine gezeigt ist, versteht es sich, dass die Maschine 100 auch mehr als drei Phasen, beispielsweise fünf Phasen, aufweisen kann.

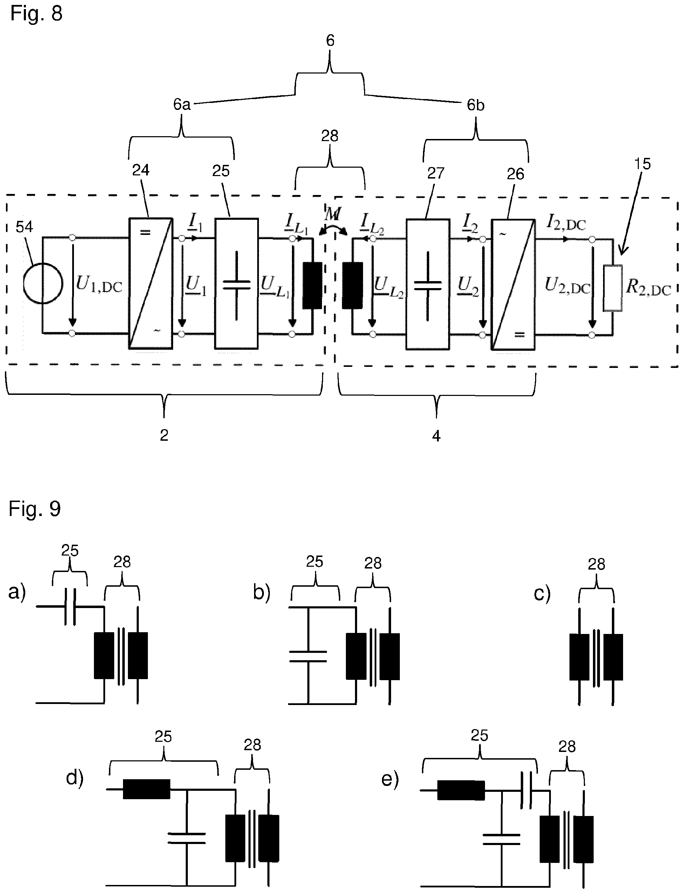

Die **Figur 8** zeigt ein Ersatzschaltbild einer Erregereinrichtung 30 gemäß einer bevorzugten Ausführungsform der vorliegenden Erfindung. Die Erregereinrichtung 30 umfasst ein Energieübertragungssystem mit einem Spulensystem 28, wobei eine Spule des Spulensystems 28 einer stationären Primärseite bzw. einem stationären Primärsystem 2 der Erregereinrichtung 30 und eine weitere Spule des Spulensystems 28 einer rotierbaren Primärseite bzw. einem rotierbaren Sekundärsystem 4 der Erregereinrichtung 30 angehört. Das Primärsystem 2 umfasst eine Spannungsquelle 54, einen Wechselrichter 24 und eine primärseitige Kompensationseinheit 25. Das Sekundärsystem 2 umfasst eine sekundärseitige Kompensationseinheit 27 und einen Gleichrichter 26. In der gezeigten Ausführungsform bilden der Wechselrichter 24 und die primärseitige Kompensationseinheit 25 die primärseitige Elektronikeinrichtung 6a. Alternativ (hier nicht gezeigt) kann auch die Energie- bzw. Spannungsquelle 54 Bestandteil der primärseitigen Elektronikeinrichtung 6a sein. Ferner bilden in der gezeigten Ausführungsform die sekundärseitige Kompensationseinheit 27 und der Gleichrichter 26 die sekundärseitige Elektronikeinrichtung 6b. Der Gleichrichter 26 ist mit der Rotorwicklung bzw. Rotorspule 15 der elektrisch erregten Maschine 100 verbunden.

Insbesondere hat das rotierende Energieübertragungssystem 20, wovon sich das Spulensystem 28 im Hohlraum des Maschinenrotors 10 befindet, den in Figur 8 gezeigten, elektrisch einphasigen, Aufbau. Das Spulensystem 28 befindet sich innerhalb des Hohlraums der Maschine 100 bzw. des Maschinenrotors 10. Die Kompensationseinheit kann jeweils mit dem Wechsel- bzw. Gleichrichter zusammen auf einer Platine angeordnet sein. Die Platine des Gleichrichters 26 ist vorzugsweise außerhalb des Hohlraumes des Maschinenrotors 10 angeordnet. Vorzugsweise handelt es sich um eine aktive Ausführung des Gleichrichters 26.

Die Kompensation kann in verschiedenen Formen ausgeführt sein. Die **Figur 9** zeigt hierzu beispielhafte verschiedene Schaltungen für eine primärseitige Kompensation des Spulensystems 28. Insbesondere zeigt Figur 9a) eine serielle Schaltung, Figur 9b) eine parallele Schaltung, Figur 9c) eine unkompensierte Schaltung, Figur 9d) eine LC-Schaltung und Figur 9e) eine LCC-Schaltung. Vorzugsweise wird für die Erregereinrichtung bzw. das Energieübertragungssystem eine resonante Schaltung verwendet, welche primärseitig seriell und sekundärseitig parallel kompensiert ist. In einer weiteren Ausführungsform kann die Schaltung primärseitig seriell und sekundärseitig unkompensiert sein. Und in einer weiteren Ausführungsform kann die Schaltung nicht resonant und beidseitig unkompensiert sein.

Zusammengefasst stellt die vorliegende Erfindung insbesondere eine neue Lösung für den Aufbau einer elektrisch erregten Synchronmaschine bereit, wobei die elektrische Energieübertragung an den Rotor vorzugsweise kontaktfrei durchgeführt wird. Insbesondere wird das Energieübertragungssystem in die hohl ausgeführte Rotorwelle der elektrischen Maschine integriert. Die Hohlwelle des Maschinenrotors kann zudem mit einem elektrisch hochleitenden Material ausgekleidet werden bzw. sein, um Verluste bei Verwendung eines induktiv kontaktlosen Übertragungssystems, insbesondere im Hochfrequenzbereich, zu minimieren. Das Übertragungssystem ist dabei vorteilhafterweise verschleißfrei und ein Motor kann weniger Bauraum beanspruchen (besonders im axialen Bereich). Ferner bietet die im Rahmen der vorliegenden Erfindung beschriebene elektrisch erregte Synchronmaschine im Vergleich zu herkömmlichen elektrisch erregten Synchronmaschinen eine höhere Zuverlässigkeit und eine geringere Wärmeentwicklung, ohne dass dabei die Leistungsdichte darunter leidet. Eine mögliche Anwendung der vorliegenden Erfindung liegt z.B. im Bereich der Elektromobilität.

**Bezugszeichenliste**

| | |
|---|---|
| 1 | Statorwicklung des Energieübertragungssystems |
| 2 | stationäres Primärsystem bzw. Stator des Energieübertragungssystems (Erreger-Stator) |
| 3 | Rotorwicklung des Energieübertragungssystems |
| 4 | rotierbares Sekundärsystem bzw. Rotor des Energieübertragungssystems (Erreger-Rotor) |
| 5 | Kühlungskanal |
| 6 | Elektronikeinrichtung |
| 6a | primärseitige Elektronikeinrichtung (Elektronik-Platine) |
| 6b | sekundärseitige Elektronikeinrichtung (Elektronik-Platine) |
| 7 | magnetflussführendes Material |
| 8 | zusätzlich elektrisch leitfähige Materialschicht |
| 9 | Kunststoff |
| 10 | Maschinen-Rotor |
| 11 | Blechpaket des Maschinen-Rotors |
| 12 | Einlass und Auslass für Kühlungsmittel |
| 13 | Maschinen-Rotorwelle |
| 14 | Öffnung / Luftloch |
| 15 | Rotorwicklung der Maschine (Erregerwicklung) |
| 16 | Luftspalt |
| 17 | Magnetflussführungselement des Maschinen-Rotors |
| 18 | Lager |
| 19 | Lager |
| 20 | Energieübertragungssystem |
| 20a | erstes Energieübertragungssystem |
| 20b | zweites Energieübertragungssystem |
| 22 | Luftspalt |
| 24 | Wechselrichter für das Energieübertragungssystem |
| 25 | primärseitige Kompensationseinheit |
| 26 | Gleichrichter für das Energieübertragungssystem |
| 27 | sekundärseitige Kompensationseinheit |
| 28 | Spulensystem |
| 30 | Erregereinrichtung |
| 40 | Maschinen-Stator |
| 42 | Nuten |
| 45 | Statorwicklung der Maschine |
| 47 | Magnetflussführungselement des Maschinen-Stators |
| 50 | Deckel |
| 52 | Wechselrichter für die elektrisch erregte Maschine |
| 54 | Energie- bzw. Spannungsquelle (Batterie) |
| 60 | Kleber |
| 62 | Kunststoffhalterung mit integriertem flussführenden Material |
| 64 | Aussparung |
| 66 | Kunststoffhülle |
| 68 | Bandage |
| 70 | Rückführungselement für die Wicklung des Erreger-Stators |
| 100 | elektrisch erregte Maschine |

**Patentansprüche**

1. Anordnung für eine elektrisch erregte Maschine (100), umfassend:

   - einen Maschinen-Rotor (10) mit einer Maschinen-Rotorwelle (13), die als Hohlwelle mit einem Hohlraum ausgestaltet ist; und
   - eine Erregereinrichtung (30) zur elektrischen Erregung der Maschine (100),

   wobei die Erregereinrichtung (30) zumindest ein Energieübertragungssystem (20) mit einer Primärseite (2) und einer Sekundärseite (4) umfasst, welches zur kontaktlosen Übertragung von elektrischer Energie von der Primärseite (2) auf die Sekundärseite (4) ausgelegt und in dem Hohlraum der Maschinen-Rotorwelle (13) angeordnet ist.

2. Anordnung nach Anspruch 1, wobei das zumindest eine Energieübertragungssystem (20) der Erregereinrichtung (30) vollständig in dem Hohlraum der Maschinen-Rotorwelle (13) angeordnet ist.

3. Anordnung nach Anspruch 1 oder 2, wobei:

   die Maschinen-Rotorwelle (13) zumindest eine Kabeldurchführung vom Hohlraum nach außen aufweist; und/oder
   die Maschinen-Rotorwelle (13) zumindest eine Öffnung (14) zur Kühlung des zumindest einen Energieübertragungssystems (20) aufweist.

4. Anordnung nach einem der vorangehenden Ansprüche, wobei

   der Maschinen-Rotor (10) eine Rotorwicklung (15) und ein Rotor-Blechpaket (11) aufweist; und
   die Primärseite (2) und die Sekundärseite (4), in axialer Richtung betrachtet, innerhalb des Rotor-Blechpakets (11) angeordnet sind.

5. Anordnung nach einem der vorangehenden Ansprüche,

   wobei das zumindest eine Energieübertragungssystem (20) der Erregereinrichtung (30) eine rotierende Energieübertragungsvorrichtung umfasst, welche vorzugsweise als Außenläufer ausgebildet ist; und/oder
   wobei das zumindest eine Energieübertragungssystem (20) der Erregereinrichtung (30) einen Erreger-Stator (2) und einen Erreger-Rotor (4) umfasst, wobei der Erreger-Stator (2) vorzugsweise aus einem sowohl magnetisch als auch elektrisch nicht leitenden Material ausgebildet ist und wobei der Erreger-Stator (2) vorzugsweise eine Bohrung zur Kühlung aufweist.

6. Anordnung nach Anspruch 5, wobei das zumindest eine Energieübertragungssystem (20) im Maschinen-Rotor (10) derart angeordnet ist, dass der Erreger-Rotor (4) drehfest mit dem Maschinen-Rotor (10) verbunden ist.

7. Anordnung nach einem der vorangehenden Ansprüche, wobei der Maschinen-Rotor (10) eine Erregerwicklung (15) aufweist, und wobei die Sekundärseite (4) ausgestaltet ist, die von der Primärseite (2) auf die Sekundärseite (4) kontaktlos übertragene elektrische Energie auf die Erregerwicklung (15) des Maschinen-Rotors (10) zu übertragen, insbesondere zur Erzeugung eines magnetischen Rotorfeldes vollständig durch einen in die Erregerwicklung eingespeisten elektrischen Strom.

8. Anordnung nach einem der vorangehenden Ansprüche, wobei die Erregereinrichtung (30) ferner eine primärseitige Elektronikeinrichtung (6a) mit einem Wechselrichter (24) und/oder eine sekundärseitige Elektronikeinrichtung (6b) mit einem Gleichrichter (26) umfasst, wobei vorzugsweise die primärseitige Elektronikeinrichtung (6a) ferner eine primärseitige Kompensationseinheit (25), insbesondere zur Blindleistungskompensation, aufweist, wobei vorzugsweise die sekundärseitige Elektronikeinrichtung (6b) ferner eine sekundärseitige Kompensationseinheit (25), insbesondere zur Blindleistungskompensation, aufweist, und wobei vorzugsweise die sekundärseitige Elektronikeinrichtung (6b) an und/oder außerhalb der Maschinen-Rotorwelle (13) angeordnet ist.

9. Anordnung nach einem der vorangehenden Ansprüche, wobei die Anordnung ferner eine Energiequelle (54) und/oder einen Umrichter (52) zur Steuerung der elektrisch erregten Maschine (100) umfasst.

10. Anordnung nach einem der vorangehenden Ansprüche, wobei eine Betriebsfrequenz des Energieübertragungssystems (20) unabhängig von einer Drehzahl der elektrisch erregten Maschine (100) ist.

11. Anordnung nach einem der vorangehenden Ansprüche,

  wobei die Erregereinrichtung (30) zwei oder mehrere Energieübertragungssysteme (20) umfasst; und/oder
  wobei die Erregereinrichtung (30) ferner zumindest ein Datenübertragungssystem, welches vorzugsweise im
  Maschinen-Rotor (10) integriert ist, umfasst.

12. Anordnung nach einem der vorangehenden Ansprüche, wobei
an zumindest einen aktiven Teil des Energieübertragungssystems (20) eine zusätzliche elektrisch leitfähige Materialschicht (8) angeordnet ist, wobei ein aktiver Teil des Energieübertragungssystems (20) ein Teil des Energieübertragungssystems (20) ist, welcher zumindest teilweise einem zur Energieübertragung genutzten Magnetfeld ausgesetzt ist, und wobei die elektrische Leitfähigkeit der zusätzlichen Materialschicht (8) größer ist als die elektrische Leitfähigkeit des zumindest einen aktiven Teils.

13. Anordnung nach Anspruch 12, wobei die zusätzliche elektrisch leitfähige Materialschicht (8) an einem Spulensystem des Energieübertragungssystems (20), insbesondere im Bereich von elektrisch schlecht leitenden und gleichzeitig magnetisch leitenden Materialen, oder im Bereich von elektrisch schlecht leitenden und gleichzeitig magnetisch nichtleitenden Materialien, angeordnet ist.

14. Anordnung nach einem der vorangehenden Ansprüche, wobei das Energieübertragungssystem (20) einen Stator aus einem elektrisch nichtleitenden Material und/oder einem magnetisch nichtleitenden Material aufweist.

15. Elektrisch erregte Maschine (100), insbesondere Motor, vorzugsweise für einen Traktionsantrieb, umfassend:

  - einen Maschinen-Stator (40); und
  - eine Anordnung nach einem der vorangehenden Ansprüche.

Fig. 1    (Stand der Technik)

a)

b)

c)

Fig. 2

EP 4 429 074 A2

Fig. 3

Fig. 4

a)

100

40

50

J

G — G

13

J

b)

J-J ( 1 : 2 )

2

20

K

10

15  13

42

40

c)

K ( 1 : 1 )

13  70

60

3

22

15

66

60

68

64

62

60

8

20

5

2

1

Fig. 5

a)

<u>100</u>  G-G ( 1 : 2 )

b)

H ( 1 : 1 )

Fig. 6

Fig. 7

Fig. 8

Fig. 9